# EUROPÄISCHE PATENTSCHRIFT

(11) **EP 3 626 520 B1**
(45) Veröffentlichungstag und Bekanntmachung des Hinweises auf die Patenterteilung: **31.03.2021**
(21) Anmeldenummer: 19196563.1
(22) Anmeldetag: 10.09.2019
(51) Int. Cl.: B60N 2/38, B60N 2/50, B60N 2/16, B60N 2/58

(54) **ABDECKUNGSVORRICHTUNG FÜR FAHRZEUGSITZE**
COVER DEVICE FOR VEHICLE SEATS
DISPOSITIF DE COUVERTURE POUR SIÈGES DE VÉHICULE

(30) Priorität: 19.09.2018 DE 102018123004; 21.08.2019 DE 102019122528; 21.08.2019 DE 102019122533
(43) Veröffentlichungstag der Anmeldung: 25.03.2020
(73) Patentinhaber: GRAMMER AG, 92289 Ursensollen (DE)
(72) Erfinder: Ott, Richard, 92245 Kümmersbruck (DE)
(74) Vertreter: Hannke, Christian

(56) Entgegenhaltungen:
- DE-A1- 19 845 011
- DE-U1- 29 713 709
- US-A1- 2016 176 326

## Beschreibung

Die Erfindung betrifft eine Abdeckungsvorrichtung für einen Sitzunterbau eines Fahrzeugsitzes, wobei die Abdeckungsvorrichtung den Sitzunterbei seitlich umgibt. Ferner betrifft die Erfindung einen Fahrzeugsitz, umfassend ein Sitzteil, eine Rückenlehne, und einen Sitzunterbau, welcher entlang einer Höhenachse Z unter dem Sitzteil angeordnet ist, wobei der Sitzunterbau seitlich von einer Abdeckungsvorrichtung vollständig umschlossen ist.

Fahrzeugsitze sind insbesondere in Nutzfahrzeugen derart ausgebildet, dass sie sowohl in vertikaler Richtung als auch gegebenenfalls in horizontaler Richtung schwingbar angeordnet sind. Dies ist zur Dämpfung der den Fahrzeugsitz benutzenden Person bei unebenem Untergrund notwendig. Hierfür weisen derartige Nutzfahrzeugsitze häufig unterhalb des Sitzteiles einen Sitzunterbau auf, welcher ein Trägergestell in Form eines Scherengestells umfasst. Gegebenenfalls sind (Luft-) feder- und/oder Dämpfungselemente vorgesehen, um die Scherenarme in ihrer Auf- und Abwärtsbewegung zu dämpfen bzw. abzufedern. Das Sitzteil wird sich demnach gegenüber einem Karosserieboden von beispielsweise einer Nutzfahrzeugkabine ständig in der Höhenrichtung in seinen Abstand verändern. Dies passiert nicht nur während der Fahrt, sondern auch im Stillstand bei anfänglicher Einstellung der Sitzhöhe eines Fahrers bzw. Beifahrers.

Der Sitzunterbau wird üblicherweise mittels einer Abdeckungsvorrichtung abgedeckt. Dies erfolgt zum einen aus optischen Gründen, zum anderen sollen die Elemente des Sitzunterbaus vor Verschmutzung beziehungsweise vor Beschädigungen geschützt werden. Darüber hinaus soll verhindert werden, dass der Nutzer sich eventuell an den Elementen des Sitzunterbaus verletzen könnte.

Als Abdeckvorrichtungen sind bisher Faltenbälge verwendet worden, die man aus elastischem, vorzugsweise gummiartigem Material herstellt, welche sich nach oben und unten zusammen und wieder auseinanderfalten, um die Höhenbewegung bei einem Schwingungszustand des Fahrzeugsitzes mitzumachen und somit eine dauerhafte Abdeckung nach außen hin von den Scherenarmen und gegebenenfalls Luftfeder- und Dämpferelemente zu ermöglichen. Derartige Faltenbälge weisen jedoch oft nicht eine entsprechende Haltbarkeit beziehungswese Stabilität auf.

Aus der Druckschrift DE 198 45 011 A1 ist eine Seitenverkleidung für einen höhenverstellbaren Fahrzeugsitz bekannt. Die Seitenverkleidung umfasst ein einem Hub des Fahrzeugsitzes folgendes elastisches Element, welches zwischen zwei nichtelastischen festen Halterungsteilen ausgebildet ist, von denen eines fahrzeugbodennah und höhenfest am Sitzgestell und das andere am höhenverstellbaren Teil des Fahrzeugsitzes angeordnet ist.

Aufgabe der vorliegenden Erfindung ist es, eine Abdeckungsvorrichtung bereitzustellen, welche die genannten Probleme löst. Ferner ist es Aufgabe der Erfindung einen Fahrzeugsitz bereitzustellen, welcher die genannten Probleme löst.

Die Aufgabe wird durch die Gegenstände der unabhängigen Ansprüche 1 und 8 gelöst. Vorteilhafte Ausgestaltungen sind den Unteransprüchen zu entnehmen.

Ein wesentlicher Punkt der Erfindung liegt darin, eine Abdeckungsvorrichtung für einen Sitzunterbau eines Fahrzeugsitzes bereitzustellen, wobei die Abdeckungsvorrichtung den Sitzunterbau seitlich umgibt, wobei die Abdeckungsvorrichtung zumindest zwei in sich steife rahmenartige Elemente umfasst, welche entlang einer Höhenachse Z teleskopartig ineinander verlagerbar sind, wobei zumindest eine Führungsvorrichtung vorgesehen ist, mittels welcher die rahmenartigen Elemente bei einer Verlagerung entlang einer Höhenachse Z geführt werden, wobei zumindest ein elastisches Element vorgesehen ist, mittels welchem die Abdeckungsvorrichtung zu einem vorgegebenen Ausgangszustand rückstellbar ist, wobei das zumindest eine elastische Element zwischen zwei rahmenartigen Elementen angeordnet ist.

Durch die in sich steifen rahmenartigen Elemente ist die Abdeckungsvorrichtung wesentlich stabiler als die bisher verwendeten Faltenbälge. Mechanische Einflüsse von außen können durch derartige in sich steife, also nicht elastische, rahmenartige Elemente effektiv verhindert werden. Ferner verhindern derart stabile Elemente effektiv ein Verletzungsrisiko des Nutzers durch den Sitzunterbau. Schließlich können die rahmenartigen Elemente besser mit optischen Elementen wie Lackierungen versehen werden, wodurch sich das optische Erscheinungsbild des gesamten Fahrzeugsitzes verbessert.

Die Abdeckungsvorrichtung sowie der Fahrzeugsitz erstrecken sich entlang einer Höhenachse Z einer Breitenachse Y und einer Tiefenachse X.
Die Führungsvorrichtung erlaubt lediglich eine Verlagerung der rahmenartigen Elemente zueinander entlang der Höhenachse Z. Eine Verlagerung relativ zueinander entlang der Breitenachse Y und der Tiefenachse X wird durch die Führung in der Führungsvorrichtung unterbunden. Hierdurch wird ein Verkanten der rahmenartigen Elemente verhindert, wodurch eine leichtgängige Verlagerung entlang der Höhenachse Z ermöglicht wird.

Die Abdeckungsvorrichtung umfasst erfindungsgemäß zumindest zwei in sich steife rahmenartige Elemente. Diese rahmenartigen Elemente haben vorzugsweise eine rechteckige oder quadratische Grundfläche. Es wäre jedoch auch denkbar, dass die rahmenartigen Elemente eine Grundfläche in Form eines beliebigen Polygons, einer Ellipse oder eines Kreises aufweisen. Der Ausdruck "teleskopartig ineinander verlagerbar" ist dahingehend zu verstehen, dass die rahmenartigen Elemente unterschiedliche Ausdehnungen, beispielsweise Seitenlängen, Durchmesser etc. aufweisen, so dass ein zweites rahmenartiges Element innerhalb eines ersten rahmenartigen Elements angeordnet werden kann. Ein vorteilhaftes drittes rahmenartiges Element wäre dann innerhalb des zweiten rahmenartigen Elements anordenbar.

Vorteilhafterweise sind die Höhen entlang der Höhenachse Z der rahmenartigen Elemente für jedes der rahmenartigen Elemente gleich. Alternativ können die Höhen entlang der Höhenachse Z der rahmenartigen Elemente für jedes der rahmenartigen Elemente unterschiedlich sein.

Der Sitzunterbau ist vorzugsweise an einem Sitzteil des Fahrzeugsitzes angeordnet. Ferner ist bevorzugt, dass der Sitzunterbau direkt an der Fahrzeugkarosserie oder an einem Fußelement angeordnet ist. Das Fußelement ist vorteilhafterweise an der Fahrzeugkarosserie angeordnet. Dies kann eine feste Verbindung oder auch ein Schienensystem sein, welches eine Verlagerung des Fahrzeugsitzes entlang des Schienensystems erlaubt.

Die Abdeckungsvorrichtung erstreckt sich vorteilhafterweise ausgehend von einer Unterseite des Sitzteils bis zu der Oberfläche der Fahrzeugkarosserie oder bis zu dem Fußteil. Ist ein Fußteil vorgesehen, kann dieses vorteilhafterweise innerhalb der Abdeckungsvorrichtung angeordnet werden. Alternativ kann die Abdeckvorrichtung auf dem Fußteil beziehungsweise entlang der Höhenachse Z über dem Fußteil angeordnet sein. Die Höhe der Abdeckungsvorrichtung entspricht demnach vorteilhafterweise dem Abstand zwischen dem Sitzteil und der Oberfläche der Fahrzeugkarosserie. Alternativ entspricht die Höhe der Abdeckungsvorrichtung dem Abstand zwischen dem Sitzteil und dem Fußteil.

Durch die erfindungsgemäße Ausgestaltung der Abdeckungsvorrichtung in Form der teleskopartigen Ausgestaltung ist die Höhe der Abdeckungsvorrichtung variabel.

Die erfindungsgemäße Rückstellung in den Ausgangszustand kann eine Rückstellung zu einer Ausgangshöhe der Abdeckvorrichtung bedeuten. Alternativ oder kumulativ kann der Ausgangszustand die Anordnung der rahmenartigen Elemente zueinander umfassen.

Die Ausgangshöhe der Abdeckvorrichtung bestimmt sich vorzugsweise aus dem Abstand zwischen dem Sitzteil und der Fahrzeugkarosserie oder zwischen dem Sitzteil und dem Fußteil. Dabei ist es von Vorteil, wenn dieser Abstand vorzugsweise durch eine Sitzhöheneinstellvorrichtung eingestellt werden kann. Vorzugsweise ist die Ausgangshöhe der Abdeckvorrichtung bestimmt durch den Abstand zwischen dem Sitzteil und der Fahrzeugkarosserie oder zwischen dem Sitzteil und dem Fußteil in einem Zustand, in dem eine Person sich in dem Sitz befindet.

Wirken nun vertikale Kräfte auf den Sitz, welche beispielsweise durch vertikale Schwingungen während der Fahrt erzeugt werden, variiert der Abstand zwischen dem Sitzteil und der Fahrzeugkarosserie beziehungsweise dem Fußteil. Die Feder- und/oder Dämpfungseinrichtung dient dazu, das Sitzteil wieder in eine entsprechende vertikale Ausgangslage überzuführen. Vorteilhafterweise nimmt in dieser der Feder- und/oder Dämpfungseinrichtung vorgegebenen vertikalen Ausgangslage des Sitzteils die Abdeckvorrichtung ihre Ausgangshöhe ein.

Die erfindungsgemäße Abdeckungsvorrichtung kann vorteilhafterweise in dessen Höhe variiert werden und passt sich demnach dem Abstand zwischen dem Sitzteil und der Oberfläche der Fahrzeugkarosserie beziehungsweise dem Fußteil an. Eine Änderung der Höhe der Abdeckungsvorrichtung erfolgt vorzugsweise durch eine Verlagerung der rahmenartigen Elemente entlang der Höhenachse Z. Eine Verringerung der Höhe der Abdeckungsvorrichtung erfolgt bevorzugt durch ein Zusammen-, beziehungsweise ein Ineinanderschieben der rahmenartigen Elemente. Eine Vergrößerung der Höhe der Abdeckungsvorrichtung erfolgt bevorzugt durch ein Auseinanderziehen der rahmenartigen Elemente.

Durch die Kraftwirkung des elastischen Elements, aufgrund von dessen Kompression oder Dehnung, kann die Abdeckungsvorrichtung wieder vorteilhafterweise seinem Ausgangszustand, beziehungsweise der Ausgangshöhe zugeführt werden. Ferner kann durch die Kraftwirkung des elastischen Elements eine ursprüngliche Anordnung der rahmenartigen Elemente relativ zueinander zurückstellen.

Nach einer bevorzugten Ausführungsform umfasst die Abdeckungsvorrichtung zumindest drei in sich steife rahmenartige Elemente. Nach einer weiteren bevorzugten Ausführungsform umfasst die Abdeckungsvorrichtung drei in sich steife rahmenartige Elemente.

Vorzugsweise umfasst die Abdeckungsvorrichtung ein entlang der Höhenachse Z oberstes und ein entlang der Höhenachse Z unterstes rahmenartiges Element. Vorteilhafterweise ist das oberste rahmenartige Element an dem Sitzteil anliegend oder anordenbar. Es wäre auch denkbar, wenn das oberste rahmenartige Element an dem Sitzteil fixiert ist. Das oberste rahmenartige Element würde demnach den Bewegungen des Sitzteils folgen. Vorteilhafterweise ist das unterste rahmenartige Element an dem Fußteil beziehungsweise an der Oberfläche der Fahrzeugkarosserie anliegend. Es wäre auch denkbar, wenn das unterste rahmenartige Element an einem Fußteil des Fahrzeugsitzes oder an einer Oberfläche der Fahrzeugkarosserie anliegend oder anordenbar ist. Es wäre auch denkbar, wenn das unterste rahmenartige Element an dem Fußteil des Fahrzeugsitzes oder an einer Oberfläche der Fahrzeugkarosserie fixiert ist. Das unterste rahmenartige Element würde demnach den Bewegungen des Fußteils des Fahrzeugsitzes oder der Oberfläche der Fahrzeugkarosserie folgen. Durch eine Änderung des Abstands zwischen dem Sitzteil und dem Fußteil beziehungsweise der Oberfläche der Fahrzeugkarosserie wird somit auch der Abstand zwischen dem obersten und dem untersten rahmenartigen Element entsprechend geändert.

Vorteilhafterweise ist ein oberer Rand des mittleren rahmenartigen Elements derart innerhalb des obersten rahmenartigen Elements angeordnet, dass dieser in einem mittleren Bereich, vorteilhafterweise im Wesentlichen mittig, entlang der Höhe des obersten Elements angeordnet ist. Dies hat den Vorteil, dass sich das mittlere Element entlang der Höhenachse Z in beiden Richtungen noch relativ zu dem obersten Element verlagern lässt. Mit anderen Worten ist noch ein Restverlagerungsweg in beide Richtungen vorhanden. Ebenso ist es vorteilhaft, wenn ein unterer Rand des mittleren rahmenartigen Elements derart innerhalb des untersten rahmenartigen Elements angeordnet ist, dass dieser in einem mittleren Bereich, vorteilhafterweise im Wesentlichen mittig, entlang der Höhe des untersten Elements angeordnet ist. Dies hat ebenso den Vorteil, dass sich das mittlere Element entlang der Höhenachse Z in beiden Richtungen noch relativ zu dem untersten Element verlagern lässt. Der mittlere Bereich wird vorteilhafterweise durch die Höheneinstellung des Fahrzeugsitzes definiert.

Nach einer weiteren bevorzugten Ausführungsform ist das zumindest eine elastische Element zwischen dem obersten rahmenartigen Element und einem mittleren rahmenartigen Element angeordnet. Durch die elastische Kraft eines derart angeordneten elastischen Elements kann die relative Ausrichtung des obersten zu dem mittleren rahmenartigen Element in die Ausgangsposition rückgestellt werden, nachdem eine entsprechende Verschiebung der rahmenartigen Elemente durch einen Krafteintrag in den Sitzunterbau erfolgte. Ferner kann vorteilhafterweise der obere Rand des mittleren rahmenartigen Elements in den mittleren Bereich des obersten rahmenartigen Elements zurückgeführt werden.

Natürlich kann die beschriebene Funktionalität auch analog auf Abdeckungsvorrichtungen mit mehr als drei rahmenartigen Elementen angewendet werden. Dabei wäre es denkbar, eine Vielzahl elastischer Elemente zwischen den unterschiedlichen rahmenartigen Elementen anzuordnen. Ferner ist es denkbar, mehr als ein elastisches Element zwischen zwei bestimmten elastischen Elementen anzuordnen.

Nach einer besonders bevorzugten Ausführungsform ist das zumindest eine elastische Element zwischen einem ersten und einem zweiten rahmenartigen Element angeordnet. Das erste und das zweite rahmenartige Element können bevorzugt das oberste und das mittlere rahmenartige Element sein. Bei einer Verringerung der Ausgangshöhe durch einen Krafteintrag, verursacht durch Schwingungen des Sitzes des Fahrzeuges, werden die rahmenartigen Elemente entsprechend ineinander verschoben oder auseinandergezogen. Vorzugsweise erfolgt durch eine Verringerung des relativen Abstands des ersten und zweiten rahmenartigen Elements zueinander ein Krafteintrag in das zumindest eine elastische Element. Durch eine Vibration des Sitzes wird beispielsweise der Abstand zwischen dem Sitzteil und dem Fußteil, beziehungsweise der Fahrzeugkarosserie, verringert. Demnach schieben sich die rahmenartigen Elemente ineinander und eine Kraft wird in das zumindest eine elastische Element eingetragen. Vorteilhafterweise erzeugt dieser Krafteintrag eine elastische Verformung des zumindest einen elastischen Elements. Der Krafteintrag wird demnach in dem zumindest einem elastischen Element gespeichert. Diese gespeicherte Kraft wird dann zur Rückstellung der rahmenartigen Elemente in deren Ausgangszustand wieder abgegeben. Vorzugsweise ist das zumindest eine elastische Element ein Druckfederelement, ein Torsionsfederelement oder ein Elastomerkörper. Bei einem Druckfederelement wird der Krafteintrag durch eine Kompression des Druckfederelements gespeichert. Ein solches Druckfederelement könnte beispielsweise eine Schraubenfeder sein. Bei einem Torsionsfederelement wird die eingetragene Kraft durch eine Torsion des Federelements gespeichert. Der Elastomerkörper kann vorteilhafterweise derart ausgebildet sein, dass die eingetragene Kraft durch eine Kompression gespeichert wird.

Nach einer weiteren bevorzugten Ausführungsform ist das zumindest eine elastische Element an einer Innenseite der Abdeckvorrichtung, beziehungsweise der rahmenartigen Elemente, welche dem Sitzunterbau zugewandt sind, angeordnet. Nach einer weiteren bevorzugten Ausführungsform sind zumindest zwei elastische Elemente vorgesehen. Vorteilhafterweise sind je zwei elastische Elemente an sich gegenüberliegenden Innenseiten der Abdeckungsvorrichtung angeordnet. Bei einer vorteilhaften Ausgestaltung der Abdeckungsvorrichtung mit einer elliptischen oder kreisförmigen Grundfläche ist es bevorzugt, wenn je zwei elastische Elemente sich diametral gegenüberliegend angeordnet sind. Durch das bevorzugte Vorsehen von je zwei elastischen Elementen an einer gegenüberliegenden/diametralen Innenseite der rahmenartigen Element wird ein Verkannten des mittleren rahmenartigen Elements bei einer entsprechenden Verlagerung verhindert.

Nach einer vorteilhaften weiteren Ausführungsform ist das zumindest eine elastische Element mittels jeweils eines nach innen ragenden Stegelementes an den beiden rahmenartigen Elementen befestigt. Demnach ragt das jeweilige Stegelement zum Sitzunterbau hin. Das jeweilige Stegelement kann integral mit dem jeweiligen rahmenartigen Element ausgebildet sein. Denkbar wäre es auch, dass das jeweilige Stegelement mittels einer formschlüssigen und/oder kraftschlüssigen und/oder einer stoffschlüssigen Verbindung mit dem rahmenartigen Element verbunden ist. Demnach kommen folgende beispielhafte Verbindungen in Betracht, welche einzeln oder in Kombination verwendet werden können: eine Schraubverbindung, eine Nietverbindung, eine Steckverbindung, eine Rastverbindung, eine Clipsverbindung, eine Klemmverbindung, eine Schweißverbindung, eine Klebeverbindung.

Vorzugsweise kontaktiert zumindest ein Stegelement bei einer maximalen Stauchung der Abdeckungsvorrichtung einen oberen Rand des entlang der Höhenachse Z darunterliegenden rahmenartigen Elements. Demnach bilden das jeweilige Stegelement mit dem jeweiligen oberen Rand des darunterliegenden rahmenartigen Elements ein Stoppfunktion aus. An dem jeweiligen oberen Rand des darunterliegenden rahmenartigen Elements kann bevorzugt eine Beschichtung oder ein zusätzliches Dämpfungselement vorgesehen sein, welche die Kontaktierung mit dem Stegelement abdämpft. Ein solches Dämpfungselement kann beispielsweise ein weiches Material beispielsweise ein Elastomer sein.

Nach einer weiteren bevorzugten Ausführungsform umfasst die Führungsvorrichtung eine Nut oder eine Schiene, welche an einem rahmenartigen Element angeordnet ist. Bevorzugt umfasst die Führungsvorrichtung ein Führungselement, welches an einem rahmenartigen Element angeordnet ist. Vorteilhafterweise ist das Führungselement in der Nut oder an der Schiene geführt. Dabei ist es von Vorteil, dass das Führungselement an einem rahmenartigen Element angeordnet ist, welches entlang der Höhenachse Z unter dem rahmenartigen Element mit der Nut oder der Schiene angeordnet ist. Vorteilhafterweise weist das oberste rahmenartige Element lediglich eine Nut oder eine Schiene auf. Bevorzugt weist das unterste rahmenartige Element lediglich ein Führungselement auf. Bevorzugt weisen die rahmenartigen Elemente, welche zwischen dem obersten und dem untersten rahmenartigen Element angeordnet sind, sowohl eine Nut oder Schiene als auch ein Führungselement auf. Durch eine solche Ausgestaltung sind alle übereinanderliegenden rahmenartigen Elemente mittels der Führungsvorrichtung entlang der Höhenachse Z geführt. Das Führungselement kann beispielsweise ein Nutenstein oder ein Gleitelement sein, welches in der Nut oder an der Schiene gleitend angeordnet ist.

Die Aufgabe wird weiterhin durch einen Fahrzeugsitz umfassend ein Sitzteil, eine Rückenlehne, und einen Sitzunterbau, welcher entlang einer Höhenachse Z unter dem Sitzteil angeordnet ist, wobei der Sitzunterbau seitlich von einer Abdeckungsvorrichtung vollständig umschlossen ist, gelöst. Dabei umfasst die Abdeckungsvorrichtung zumindest zwei in sich steife, rahmenartige Elemente, welche entlang einer Höhenachse Z teleskopartig ineinander verlagerbar sind, wobei zumindest eine Führungsvorrichtung vorgesehen ist, mittels welcher die rahmenartigen Elemente bei einer Verlagerung entlang einer Höhenachse Z geführt werden, wobei zumindest ein elastisches Element vorgesehen ist, mittels welcher die Abdeckungsvorrichtung zu einem vorgegebenen Ausgangszustand rückstellbar ist, wobei das zumindest eine elastische Element zwischen zwei rahmenartigen Elementen angeordnet ist.

Der Fahrzeugsitz kann dabei mit allen bereits obig im Rahmen der Vorrichtung beschriebenen Merkmalen einzeln oder in Kombination miteinander ausgestattet sein und umgekehrt.

Nach einer bevorzugten Ausführungsform umfasst der Sitzunterbau ein Tragegestell, mittels welchem das Sitzteil mit einem Fußteil und/oder einer Fahrzeugkarosserie verbunden ist. Vorzugsweise ist ein derartiges Fußteil seinerseits mit der Fahrzeugkarosserie verbunden. Vorteilhafterweise umfasst der Sitzunterbau eine Feder- und/oder Dämpfungsvorrichtung für Schwingungen in vertikaler Richtung, also entlang der Höhenachse Z. Bevorzugt umfasst der Sitzunterbau eine Feder- und/oder Dämpfungsvorrichtung für Schwingungen in horizontaler Richtung, also entlang der Breitenrichtung Y und/oder der Tiefenrichtung X.

Nach einer bevorzugten Ausführungsform des Fahrzeugsitzes umfasst die Abdeckungsvorrichtung zumindest drei in sich steife rahmenartige Elemente. Vorzugsweise umfasst die Abdeckungsvorrichtung drei in sich steife rahmenartige Elemente. Dabei ist es von Vorteil, dass die Abdeckungsvorrichtung ein entlang der Höhenachse Z oberstes und ein entlang der Höhenachse Z unterstes rahmenartiges Element umfasst. Das oberste rahmenartige Element ist vorzugsweise an dem Sitzteil angeordnet. Das unterste rahmenartige Element ist bevorzugt an einem Fußteil des Fahrzeugsitzes oder an einer Oberfläche der Fahrzeugkarosserie angeordnet.

Nach einer weiteren bevorzugten Ausführungsform des Fahrzeugsitzes ist das elastische Element an einer Innenseite der Abdeckungsvorrichtung, beziehungsweise der rahmenartigen Elemente, welche dem Sitzunterbau zugewandt ist, angeordnet. Dabei ist es von Vorteil, dass die Abdeckungsvorrichtung zumindest zwei elastische Elemente aufweist. Vorzugsweise sind je zwei elastische Elemente an sich gegenüberliegenden Innenseiten der Abdeckungsvorrichtung, beziehungsweise diametral angeordnet.

Nach einer weiteren bevorzugten Ausführungsform des Fahrzeugsitzes ist das zumindest eine elastische Element zwischen einem ersten und einem zweiten rahmenartigen Element angeordnet ist. Vorteilhafterweise erfolgt durch eine Verringerung des relativen Abstands des ersten und zweiten rahmenartigen Elements zueinander ein Krafteintrag in das zumindest eine elastische Element. Dabei ist es von Vorteil, dass dieser Krafteintrag eine elastische Verformung des zumindest einen elastischen Elements erzeugt. Vorzugsweise ist das zumindest eine elastische Element ein Druckfederelement, ein Torsionsfederelement oder ein Elastomerkörper. Bevorzugt ist das elastische Element mittels jeweils eines nach innen ragenden Stegelements an den beiden rahmenartigen Elementen befestigt. Vorzugsweise kontaktiert zumindest ein Stegelement bei einer maximalen Stauchung der Abdeckungsvorrichtung einen oberen Rand des entlang der Höhenachse Z darunterliegenden rahmenartigen Elements.

Nach einer vorteilhaften Ausführungsform des Fahrzeugsitzes umfasst die Führungsvorrichtung eine Gleitaufnahme in Form einer Nut oder einer Schiene, welche an einem rahmenartigen Element angeordnet ist. Vorzugsweise umfasst die Führungsvorrichtung ein Führungselement, welches an einem rahmenartigen Element angeordnet ist. Bevorzugt ist ein Führungselement in oder an der Gleitaufnahme in Form einer Nut oder einer Schiene geführt. Vorzugsweise ist das Führungselement an einem rahmenartigen Element angeordnet, welches entlang der Höhenachse Z unter dem rahmenartigen Element mit der Gleitaufnahme angeordnet ist.

Nach einer weiteren bevorzugten Ausführungsform sind die rahmenartigen Elemente aus einem Kunststoff oder einem Metall gefertigt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine isometrische Ansicht des Fahrzeugsitzes nach einer Ausführungsform;
- Fig. 2: eine isometrische Ansicht der Abdeckungsvorrichtung nach einer Ausführungsform;
- Fig. 3: eine Seitenansicht der Abdeckungsvorrichtung nach einer Ausführungsform;
- Fig. 3a: eine Schnittansicht der Abdeckungsvorrichtung nach einer Ausführungsform;
- Fig. 4: eine Seitenansicht der Abdeckungsvorrichtung nach einer Ausführungsform;
- Fig. 4a: eine Schnittansicht der Abdeckungsvorrichtung nach einer Ausführungsform;
- Fig. 5: eine Seitenansicht der Abdeckungsvorrichtung nach einer Ausführungsform;
- Fig. 6: eine Seitenansicht der Abdeckungsvorrichtung nach einer Ausführungsform in einem nicht komprimierten Zustand;
- Fig. 6a: eine Schnittansicht der Abdeckungsvorrichtung nach einer Ausführungsform in einem nicht komprimierten Zustand;
- Fig. 7: eine Seitenansicht der Abdeckungsvorrichtung nach einer Ausführungsform in einem komprimierten Zustand;
- Fig. 7a: eine Schnittansicht der Abdeckungsvorrichtung nach einer Ausführungsform in einem komprimierten Zustand;
- Fig. 8: eine isometrische Ansicht des Fahrzeugsitzes nach einer Ausführungsform;
- Fig. 9: eine Seitenansicht des Fahrzeugsitzes nach einer Ausführungsform;
- Fig. 10: eine Rückansicht des Fahrzeugsitzes nach einer Ausführungsform
- Fig. 11: eine Vorderansicht des Fahrzeugsitzes nach einer Ausführungsform;
- Fig. 12: eine isometrische Ansicht des Fahrzeugsitzes nach einer Ausführungsform;
- Fig. 13: eine Seitenansicht der Abdeckungsvorrichtung nach einer Ausführungsform;
- Fig. 14: eine Rückansicht der Abdeckungsvorrichtung nach einer Ausführungsform;
- Fig. 15: eine isometrische Ansicht der Abdeckungsvorrichtung nach einer Ausführungsform;
- Fig. 16: eine Rückansicht der Abdeckungsvorrichtung nach einer Ausführungsform;
- Fig. 17: eine Schnittansicht der rahmenartigen Elemente nach einer Ausführungsform;
- Fig. 18: eine Draufsicht der Abdeckungsvorrichtung nach einer Ausführungsform;
- Fig. 19: eine Unteransicht der Abdeckungsvorrichtung nach einer Ausführungsform.

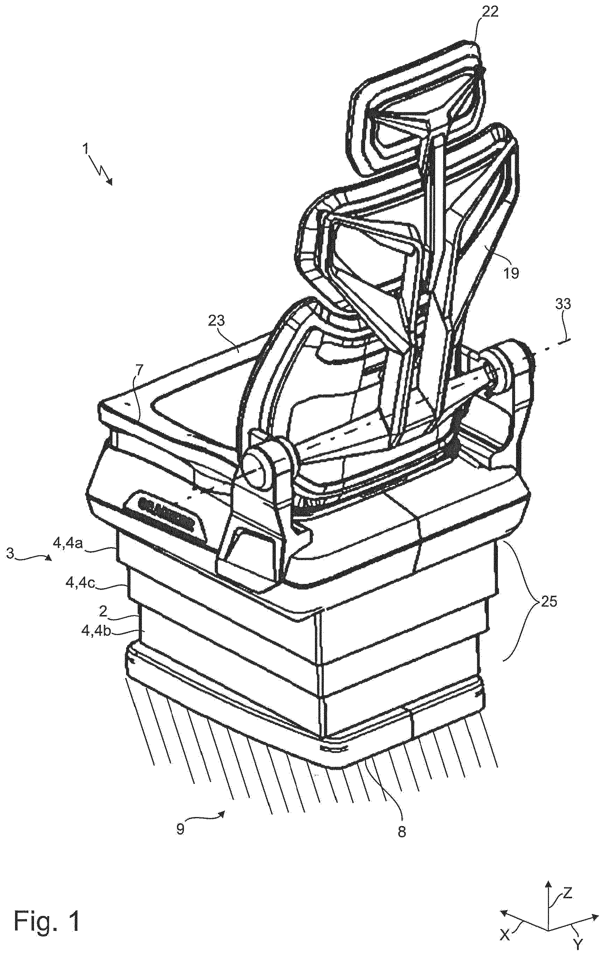

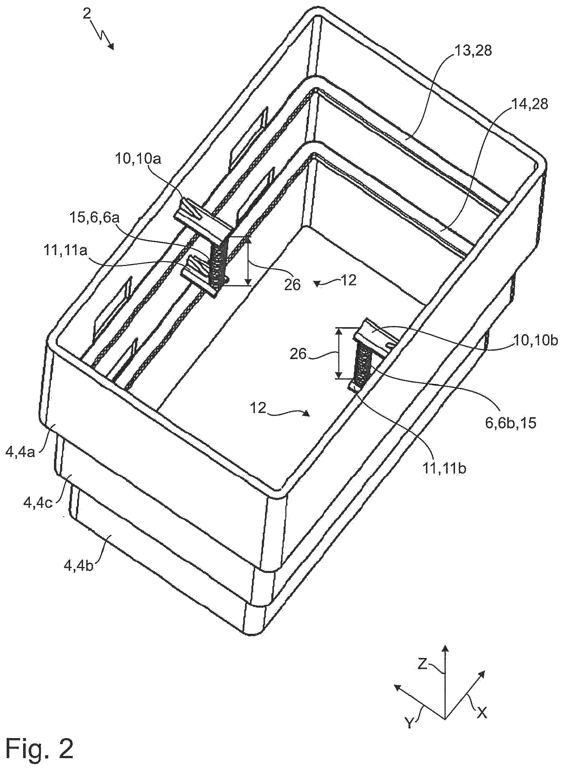

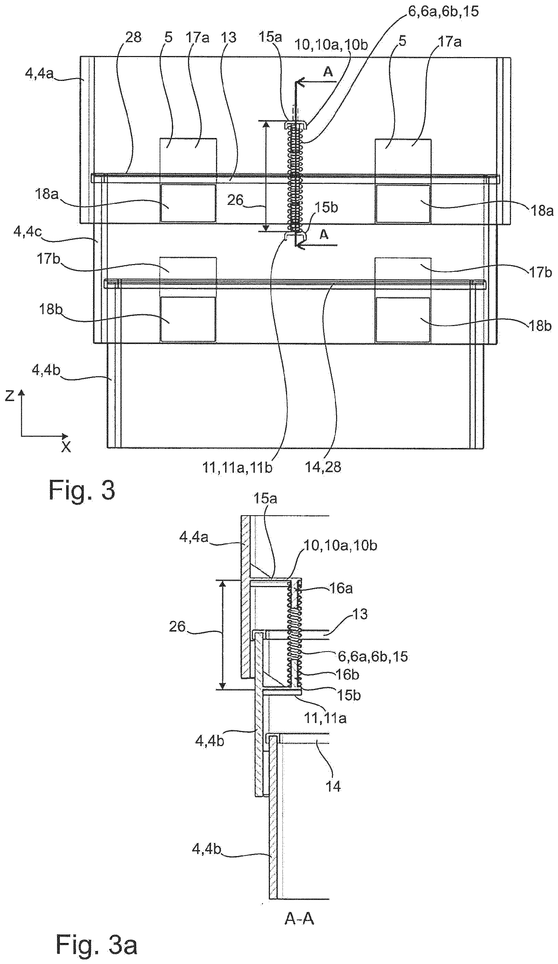

Die Figuren 1 bis 19 zeigen eine Abdeckungsvorrichtung (2) für einen Sitzunterbau (3) eines Fahrzeugsitzes (1), wobei die Abdeckungsvorrichtung (2) den Sitzunterbau (3) seitlich umgibt, wobei die Abdeckungsvorrichtung (2) zumindest zwei in sich steife rahmenartige Elemente (4, 4a, 4b, 4c) umfasst, welche entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das zumindest eine elastische Element (6, 6a, 6b) zwischen zwei rahmenartigen Elementen (4, 4a, 4b, 4c) angeordnet ist.

Ferner zeigen die Figuren 1 bis 19 einen Fahrzeugsitz (1), umfassend ein Sitzteil (7), eine Rückenlehne (19), und einen Sitzunterbau (3), welcher entlang einer Höhenachse Z unter dem Sitzteil (7) angeordnet ist, wobei der Sitzunterbau (3) seitlich von einer Abdeckungsvorrichtung (2) vollständig umschlossen ist, wobei die Abdeckungsvorrichtung (2) zumindest zwei in sich steife rahmenartige Elemente (4, 4a, 4b, 4c) umfasst, welche entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das zumindest eine elastische Element (6, 6a, 6b) zwischen zwei rahmenartigen Elementen (4, 4a, 4b, 4c) angeordnet ist.

Der Fahrzeugsitz (1) sowie die Abdeckungsvorrichtung (2) erstreckt sich entlang einer Höhenachse Z, einer Breitenachse Y und einer Tiefenachse X.

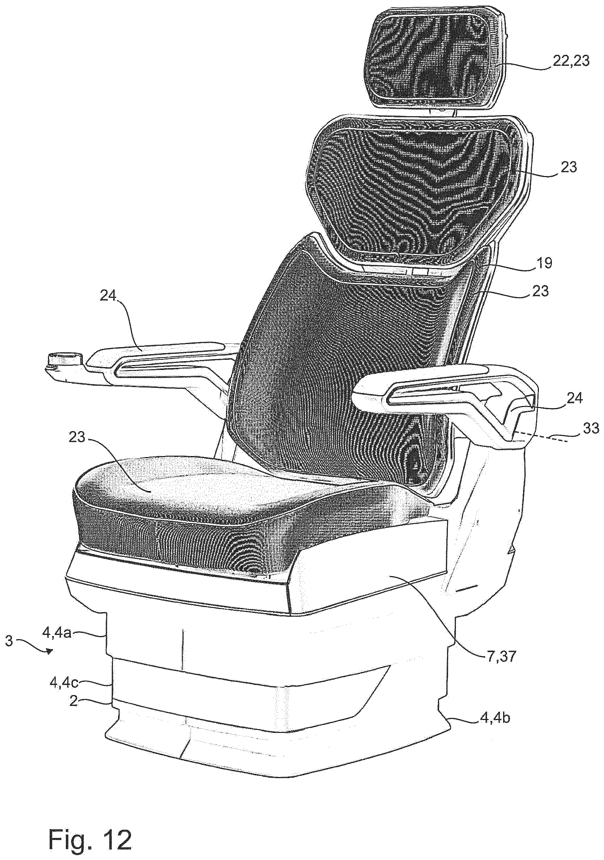

Der Fahrzeugsitz (1) ist in den Figuren 1, 8 bis 12 dargestellt. Dabei ist erkennbar, dass an der Rückenlehne (19) weiterhin ein Kopfteil (22) angeordnet sein kann. Der Fahrzeugsitz (1) kann weiterhin Polsterelemente (23) umfassen, welche sowohl an dem Sitzteil (7) als auch an der Rückenlehne (19) und/oder dem Kopfteil (22) angeordnet sein können. In Figur 12 ist ein Ausführungsbeispiel dargestellt, welches Armlehnen (24) umfasst.

Der Sitzunterbau (3) umfasst ein Tragegestell (20), beispielsweise ein Scherengestell, mittels welchem das Sitzteil (7) mit einem Fußteil (8) verbunden ist. Das Fußteil (8) ist wiederum mit der Fahrzeugkarosserie (9) verbunden. Es wäre jedoch auch möglich, dass das Tragegestell (20) direkt mit der Fahrzeugkarosserie (9) verbunden ist. Dies könnte beispielsweise mit einem Schienensystem erfolgen, wodurch der Fahrzeugsitz (1) verlagerbar relativ zu der Fahrzeugkarosse (9) wäre.

Das Sitzteil (7) ist vorzugsweise ein in sich steifer Sitzteilrahmen oder dergleichen, an dessen Unterseite die teleskopartige Abdeckungsvorrichtung (2) angeordnet ist.

Ferner weist der Sitzunterbau (3) eine Feder- und/oder Dämpfungsvorrichtung (21) für Schwingungen in vertikaler (entlang der Höhenachse Z) und oder horizontaler Richtung (entlang der Breitenachse Y und/oder entlang der Tiefenachse X) auf.

Die in den Figuren 1 bis 19 dargestellte Abdeckungsvorrichtung (2) ist rechteckförmig (entlang den Achsen X und Y) ausgestaltet und weist eine Erstreckung entlang der Höhenachse Z auf.

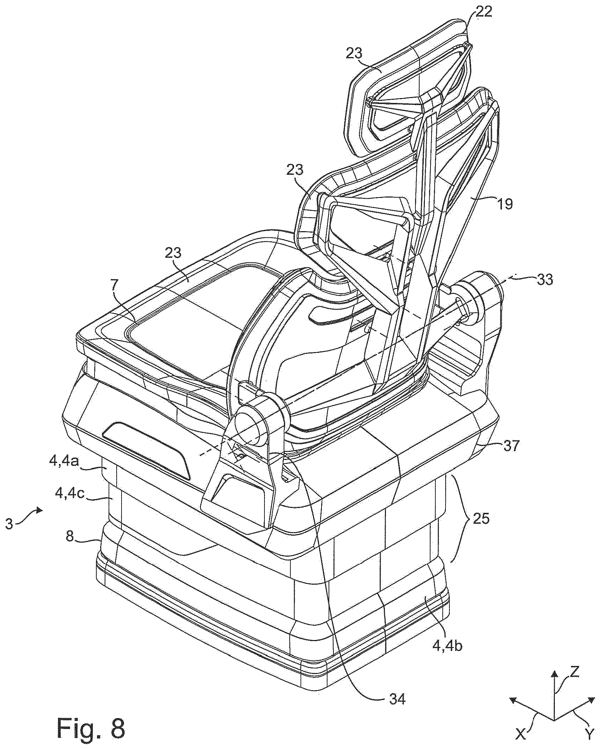

Die Abdeckungsvorrichtung (2) gemäß den Figuren 1 bis 7 umfasst zumindest drei in sich steife, rahmenartige Elemente (4, 4a, 4b, 4c) insbesondere drei in sich steife, rahmenartige Elemente (4, 4a, 4b, 4c). Die Ausführungsformen gemäß den Figuren 8 bis 19 umfassen zunächst zwei in sich steife rahmenartige Elemente (4, 4a, 4c). Ein weiteres unterstes rahmenartiges Element (4, 4b) ist dabei integral mit dem Fußteil (8) ausgebildet.

Das oberste rahmenartige Element (4, 4a) ist an einem Sitzteil (7) angeordnet. Dies kann lediglich ein Anliegen sein oder auch eine feste Fixierung. Das unterste rahmenartige Element (4, 4b) ist an dem Fußteil (8) des Fahrzeugsitzes (1) angeordnet. Dies kann ebenso lediglich ein Anliegen sein oder auch eine feste Fixierung sein. Ferner besitzt das oberste rahmenartige Element (4, 4a) eine größere Abmessung, d. h. größere Seitenlängen, als das mittlere rahmenartige Element (4, 4c), wodurch das mittlere rahmenartige Element (4, 4c) innerhalb des obersten rahmenartigen Element (4, 4a) anordenbar ist. Das mittlere rahmenartige Element (4, 4c) besitzt eine größere Abmessung, d. h. größere Seitenlängen, als das unterste rahmenartige Element (4, 4b), wodurch das unterste rahmenartige Element (4, 4b) innerhalb des mittleren rahmenartigen Elements (4, 4b) anordenbar ist. Hierdurch wird eine teleskopartige Höhenänderung der Abdeckvorrichtung realisiert.

In den Ausführungsformen nach den Figuren 1 bis 7 erstreckt sich die Abdeckungsvorrichtung (2) von einer Unterseite des Sitzteils (7) bis zu dem Fußteil (8). Demnach ist die Höhe (25) der Abdeckungsvorrichtung (2) der Abstand zwischen dem Sitzteil (7) und dem Fußteil (8). Eine minimale Höhe der Abdeckungsvorrichtung (2) entspricht somit einer minimalen Höhe des Sitzunterbaus (3), welche einer vollständigen Einfederung entspricht. Eine solche vollständige Einfederung umfasst einen sogenannten Anschlag, bei welchem eine weitere Verlagerung des Scherengestells nicht mehr möglich ist. Analog entspricht eine maximale Höhe der Abdeckungsvorrichtung (2) einer maximalen Höhe des Sitzunterbaus (3).

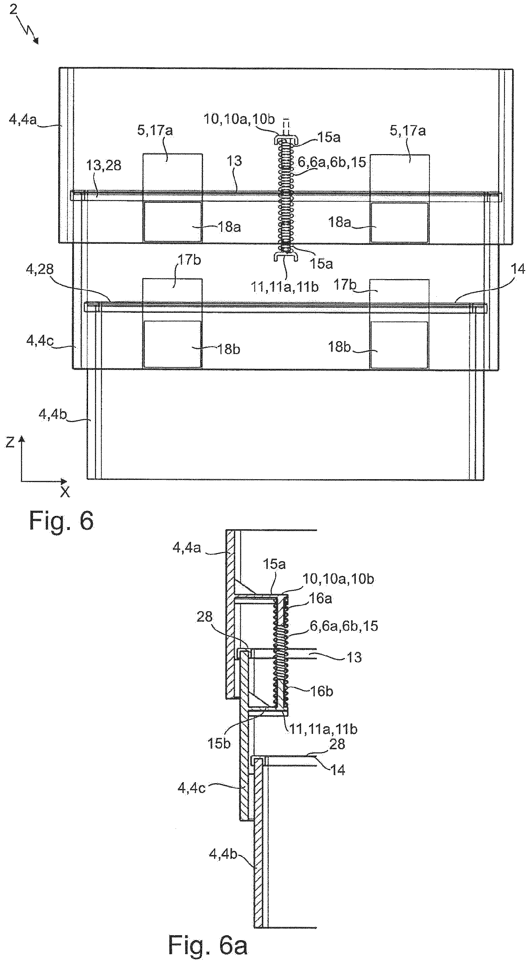

Das mittlere rahmenartige Element (4, 4c) weist einen oberen Rand (13) auf. Ebenso weist das unterste rahmenartige Element (4, 4b) einen oberen Rand (41) auf. In einer möglichen Ausgangslage ist der obere Rand (13) des mittleren rahmenartigen Elements (4, 4c) in einem mittleren Bereich oder im Wesentlichen mittig innerhalb des obersten rahmenartigen Elements (4, 4a) angeordnet. Ebenso ist in einer möglichen Ausgangslage der obere Rand (14) des untersten rahmenartigen Elements (4, 4b) in einem mittleren Bereich oder im Wesentlichen mittig innerhalb des mittleren rahmenartigen Elements (4, 4c) angeordnet. Dies ist beispielsweise in Figur 6 dargestellt. Dies hat den Vorteil, dass sich das mittlere rahmenartige Element (4, 4c) entlang der Höhenachse Z in beiden Richtungen (nach oben und nach unten) noch relativ zu dem obersten rahmenartigen Element (4, 4a) beziehungsweise das unterste rahmenartige Element (4, 4b) entlang der Höhenachse Z in beiden Richtungen (nach oben und nach unten) noch relativ zu dem mittleren rahmenartigen Element (4, 4c) verlagern lässt. Mit anderen Worten ist noch ein Restverlagerungsweg in beiden Richtungen (nach oben und nach unten) für das jeweilige rahmenartige Element (4, 4b, 4c) vorhanden. Dieser genannte mittlere Bereich kann natürlich durch die Höheneinstellung entsprechend variiert werden.

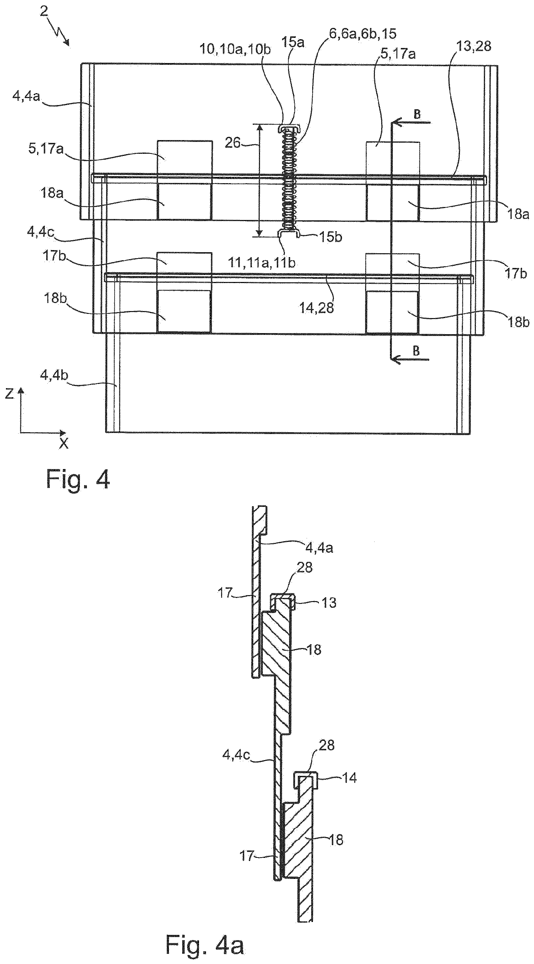

Die Führungsvorrichtung (5) umfasst eine Gleitaufnahme (17) in Form einer Nut oder einer Schiene und ein Führungselement (18), welches in oder an der Gleitaufnahme (17) in Form einer Nut oder einer Schiene geführt ist. Die Gleitaufnahme (17) und das Führungselement (18) sind an je einem entlang der Höhenachse Z untereinander angeordneten rahmenartigen Element (4, 4a, 4b, 4c) angeordnet. Vorliegend ist eine Gleitaufnahme (17a) an dem obersten rahmenartigen Element (4, 4a,) angeordnet. Das in dieser Gleitaufnahme (17a) geführte Führungselement (18a) ist in dem mittleren rahmenartigen Element (4, 4c) angeordnet. Das mittlere rahmenartigen Element (4, 4c) weist eine weitere Gleitaufnahme (17b) auf, welche entlang der Höhenachse Z unter dem Führungselement (18a) angeordnet ist. In dieser weiteren Gleitaufnahme (17b) ist ein weiteres Führungselement (18b) geführt, welches an dem untersten rahmenartigen Element (4, 4b) angeordnet ist. Dies ist beispielsweise in der Figur 4a gut ersichtlich. Die Abdeckungsvorrichtung ist dabei vorteilhafterweise mit 4 Führungsvorrichtungen (5) ausgestattet. An jeder sich entlang der Tiefenachse X erstreckenden Innenseite (12) sind dabei jeweils zwei Führungsvorrichtungen (5) vorgesehen. Diese zwei Führungsvorrichtungen (5) sind zueinander entsprechend beabstandet, so dass eine leichtgängige Führung der rahmenartigen Elemente (4, 4a, 4b, 4c) ermöglicht wird. Die Erfindung ist jedoch nicht beschränkt auf diese Anzahl an Führungsvorrichtungen (5).

Das zumindest eine elastische Element (6) ist zwischen dem obersten rahmenartigen Element (4, 4a) und einem mittleren rahmenartigen Element (4, 4c) angeordnet. Bei der Ausführungsform nach den Figuren 8 bis 19 ist, wie bereits ausgeführt, das unterste rahmenartige Element (4, 4b) integral mit dem Fußteil (8) ausgebildet, so dass auch hier von einem mittleren rahmenartigen Element (4, 4c) gesprochen werden kann.

Ferner ist das zumindest eine elastische Element (6, 6a, 6b) an einer Innenseite (12) der rahmenartigen Elemente (4, 4a, 4b, 4c), welche dem Sitzunterbau (3) zugewandt sind, angeordnet. Gemäß den Ausführungsformen in den Figuren 1 bis 7 weist die Abdeckungsvorrichtung (2) zwei elastische Elemente (6, 6a, 6b) auf, wobei je zwei elastische Elemente (6, 6a, 6b) an sich gegenüberliegenden Innenseiten (12) der rahmenartigen Elemente (4, 4a, 4b) angeordnet sind. Diese Innenseiten (12) erstrecken sich entlang der Tiefenachse X.

Weiterhin ist das zumindest eine elastische Element (6, 6a, 6b) zwischen einem ersten (4, 4a, 4b, 4c) und einem zweiten rahmenartigen Element (4, 4a, 4b, 4c) angeordnet. Vorliegend entspricht das oberste rahmenartige Element (4, 4a) dem ersten rahmenartigen Element und das mittlere rahmenartige Element (4, 4c) dem zweiten rahmenartigen Element. Durch eine Verringerung des relativen Abstands des ersten (4, 4a, 4b, 4c) und zweiten rahmenartigen Elements (4, 4a, 4b, 4c) zueinander erfolgt ein Krafteintrag in das zumindest eine elastische Element (6, 6a, 6b), wobei dieser Krafteintrag eine elastische Verformung des zumindest einen elastischen Elements (6, 6a, 6b) erzeugt. Vorliegend ist das zumindest eine elastische Element (6, 6a, 6b) als ein Druckfederelement (15) ausgeführt. Demnach entspricht die angeführte Verformung einer Kompression des Druckfederelements (15). Alternativ ist auch eine Verwendung eines Torsionsfederelements oder ein Elastomerkörper als elastisches Element denkbar.

Das zumindest eine elastische Element (6, 6a, 6b) ist mittels jeweils eines nach innen ragenden Stegelementes (10, 10a, 10b, 11, 11a, 11b) an den beiden rahmenartigen Elementen (4, 4a, 4b, 4c), befestigt. Demnach ist ein erstes Stegelement (10,10a) an dem obersten rahmenartigen Element (4, 4a) befestigt. Dies kann mittels einer beliebigen formschlüssigen und/oder kraftschlüssigen und/oder stoffschlüssigen Verbindung realisiert sein. Die Stegelemente (10, 10a, 10b, 11, 11a, 11b) regen demnach entlang der Breitenachse Y in den Innenraum der Abdeckungsvorrichtung (2) in Richtung des Sitzunterbaus (3).

Gemäß den Ausführungsformen nach den Figuren 1 bis 7 ist das zumindest eine elastische Element (6, 6a, 6b) ein Druckfederelement (15). Dieses Druckfederelement (15) ist zwischen beiden Stegelementen (10, 10a, 10b, 11, 11a, 11b) angeordnet. Die Stegelemente (10, 10a, 10b, 11, 11a, 11b) weisen dabei ein zapfenförmiges Führungselement (16a, 16b) auf, welches sich entlang der Höhenachse Z erstreckt. Das Druckfederelement (15) ist auf diesen zapfenförmigen Führungselementen (16a, 16b) angeordnet. Dabei liegt ein oberes Ende (15a) des Druckfederelements (15) an dem oberen Stegelement (10, 10a, 10b) an und ein unteres Ende (15b) des Druckfederelements (15) an dem unterem Stegelement (11, 11a, 11b).

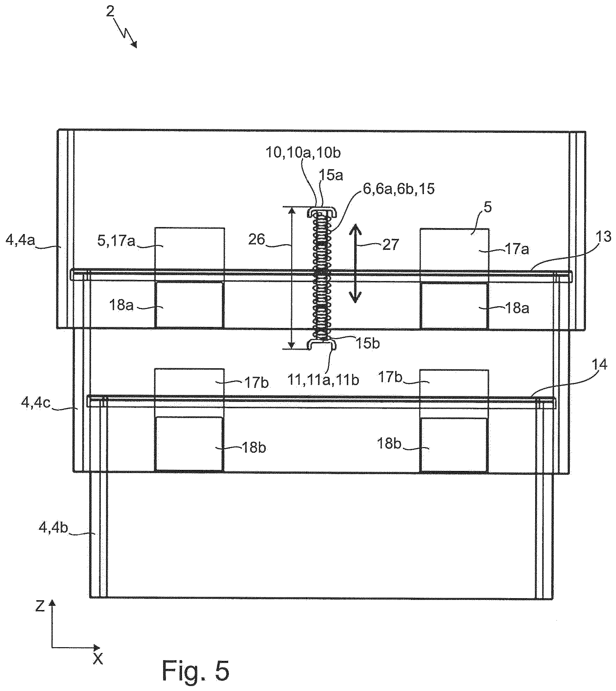

Durch eine Verlagerung des Sitzteil (7) relativ zu dem Fußteil (8) ist eine entsprechende Kraft entlang der Höhenachse Z in das zumindest eine elastische Element (6, 6a, 6b) einbringbar. Wirken demnach vertikale Kräfte auf den Fahrzeugsitz (1), welche beispielsweise durch vertikale Schwingungen während der Fahrt erzeugt werden, variiert der Abstand zwischen dem Sitzteil (7) und der Fahrzeugkarosserie (9) beziehungsweise dem Fußteil (8). Die Feder- und/oder Dämpfungseinrichtung (21) dient dazu, das Sitzteil (7) wieder in eine entsprechende vertikale Ausgangslage überzuführen. Eine entsprechende Verringerung der Höhe (25) verursacht ein Ineinanderschieben, entlang des Pfeils (27) in Figur 5, der rahmenartigen Elemente (4, 4a, 4b) Demnach wird auch der Abstand (26) zwischen dem oberen Stegelement (10, 10a, 10b) und dem unterem Stegelement (11, 11a, 11b) verringert, wodurch das Druckfederelement (15) komprimiert wird. Nach dem Krafteintrag wird durch eine entsprechende Ausdehnung des zumindest einen elastischen Elements (6, 6a, 6b) beziehungsweise der zumindest einen Druckfeder (15) der Ausgangszustand, beziehungsweise die relative Ausgangslage des obersten rahmenartigen Elements (4, 4a), zu dem mittleren rahmenartigen Element (4, 4c) zurückgestellt.

Die Figur 4 zeigt die Abdeckungsvorrichtung (2) und einen Doppelpfeil (27), welcher entlang der Höhenachse Z orientiert ist. Die rahmenartigen Elemente (4, 4a, 4b, 4c) können sich dabei entlang des Doppelpfeils (27) relativ zueinander verschieben.

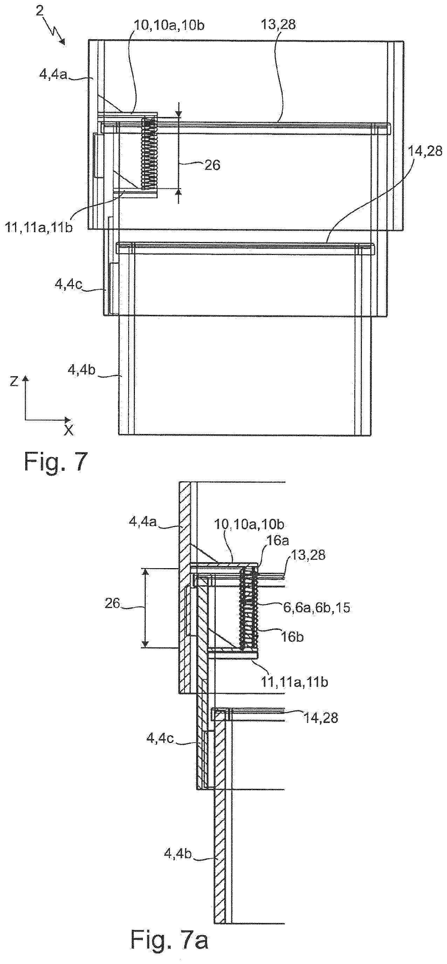

In den Figuren 6 und 6a ist ein möglicher Ausgangszustand der Abdeckungsvorrichtung (2) dargestellt. In den Figuren 7 und 7a ist ein eingefederter Zustand des Fahrzeugsitzes (1) dargestellt, in welchem die rahmenartigen Elemente (4, 4a, 4b, 4c) der Abdeckungsvorrichtung (2) sich teleskopartig ineinander verschoben haben. Hier liegt das obere Stegelement (10,10a, 10b) an einen oberen Rand (13) des entlang der Höhenachse Z darunterliegenden mittleren rahmenartigen Elements (4, 4c) an. Durch ein solches Kontaktieren der Stegelemente (10,10a, 10b, 11, 11a, 11b) an einen oberen Rand (14) des entlang der Höhenachse Z darunterliegenden rahmenartigen Elements (4, 4c, 4b) kann eine Stopperfunktion realisiert werden. Der jeweilige obere Rand (13, 14) des mittleren (4, 4b) und des untersten rahmenartigen Elements (4, 4b) ist mit einem kissenartigen Dämpfungselement (28) versehen. Dies ist in Figur 4a gut ersichtlich. Hierdurch können beispielsweise unerwünschte Aufsetzgeräusche oder ähnliches vermieden werden.

Erfindungsgemäß wird demnach eine Alternative zu den bekannten Faltenbälgen vorgestellt. Hierbei handelt es sich um eine teleskopartige Abdeckungsvorrichtung (2), welche einzelne in sich steife, also nicht elastische, rahmenartige Elemente (4, 4a, 4b, 4c) aufweist.

Die rahmenartigen Elemente (4, 4a, 4b, 4c) können entlang der Höhenachse Z nach unten hin betrachtet ineinander hängen und bei einer Verringerung des Abstands zwischen dem Sitzteil (7) und der Oberseite des Karosseriebodens (9) ineinander verfahren, um weiterhin eine optische Abdeckung von Scherenarmen, Dämpferelementen und Luftfedern zu ermöglichen.

In den Ausführungsformen gemäß den Figuren 8 bis 19 wird ein Fahrzeugsitz (1) beschrieben, mit einer Abdeckvorrichtung (2), welcher zwei rahmenartigen Elemente (4, 4a, 4c) umfasst. Das unterste rahmenartige Element (4, 4b) ist dabei integral mit dem Fußteil (8) ausgebildet.

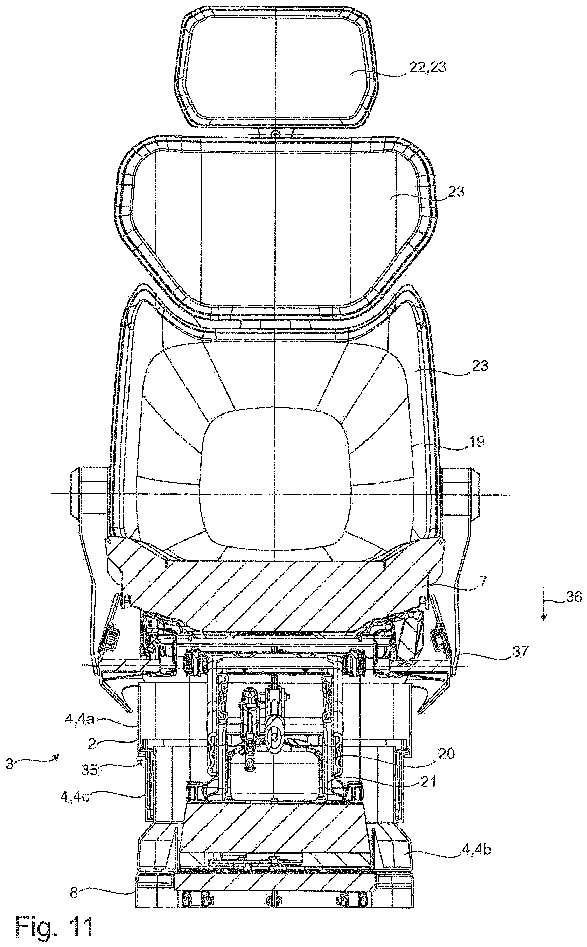

Ferner wird in den Figuren 11, 16, und 17 eine möglich vorteilhafte Ausführungsform dargestellt, bei welcher zwei rahmenartigen Elemente (4, 4a, 4c) in einem maximal ausgezogenen Zustand ineinander hängen. So kann auch bei einer maximalen Höhe des Sitzunterbaus (3) sichergestellt werden, dass der Sitzunterbau (3) freigelegt ist. Diese Funktionalität kann natürlich auch in den bereits genannten Ausführungsformen implementiert werden. Dementsprechend können die Merkmale in den oben beschriebenen Ausführungsformen auch bei diesen Ausführungsformen implementiert sein.

In Fig. 8 wird ein Fahrzeugsitz (1) für ein Nutzfahrzeug dargestellt, welcher eine Rückenlehne (19) und ein Sitzteil (7) aufweist. Die Rückenlehne (19) ist mittels einer Schwenkachse (33), die an sich nach oben erstreckenden Schenkelbauteilen (34) schwenkbar angeordnet ist, schwenkbar gehalten.

Unterhalb des Sitzteiles (7) ist eine Abdeckung (2), die teleskopartig ausgebildet ist, dargestellt. Diese teleskopartige Abdeckung (2) dient zum Abdecken von dahinterliegenden Scherenarmen, Dämpferelementen und Luftfedern.

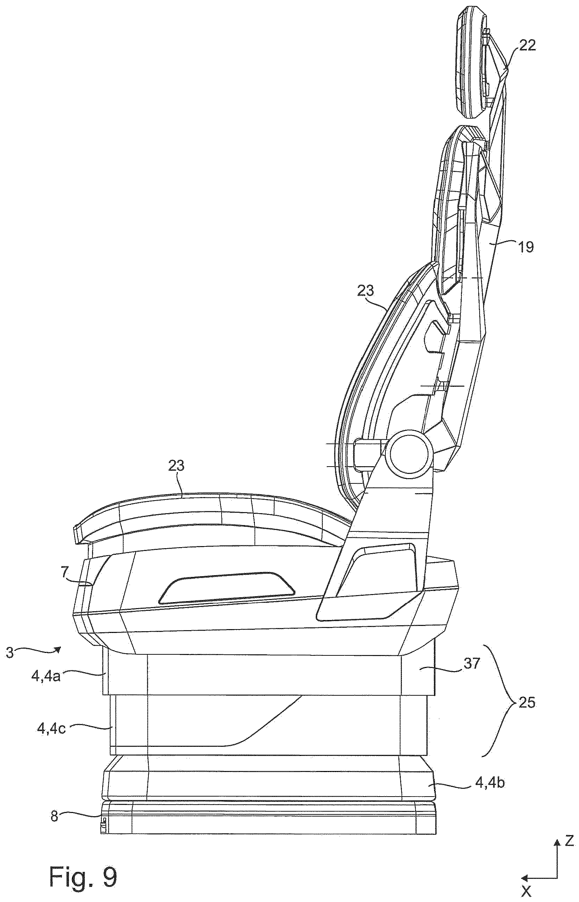

In Fig. 9 weist das Sitzteil (7) an seiner Oberseite ein Polsterelement (23) auf, an seiner Unterseite ist die teleskopartige Abdeckung (2) angeordnet. Diese teleskopartige Abdeckung (2) besteht aus einzelnen Elementen (4, 4a, 4b, 4c), die rahmenartig ausgebildet sind und vorzugsweise in sich greifen.

In Figur 11 sind die Abdeckelemente (4, 4a, 4b, 4c) in einem Querschnitt eines Nutzfahrzeugsitzes nochmal wiedergegeben. Dieser Darstellung ist auch deutlich zu entnehmen, dass im Bereich (35) die einzelnen rahmenartigen Abdeckelemente (4, 4a, 4b, 4c) derart miteinander verbunden sind, dass sie ineinander greifen und beispielsweise das unten angeordnete mittlere Abdeckelement (4, 4c) innerhalb des darüber angeordneten obersten Abdeckelementes (4,4a) hineingeschoben wird, sofern der gesamte Fahrzeugsitz bei einer eingeleiteten Schwingung entlang des Pfeiles (36) sich nach unten bewegt.

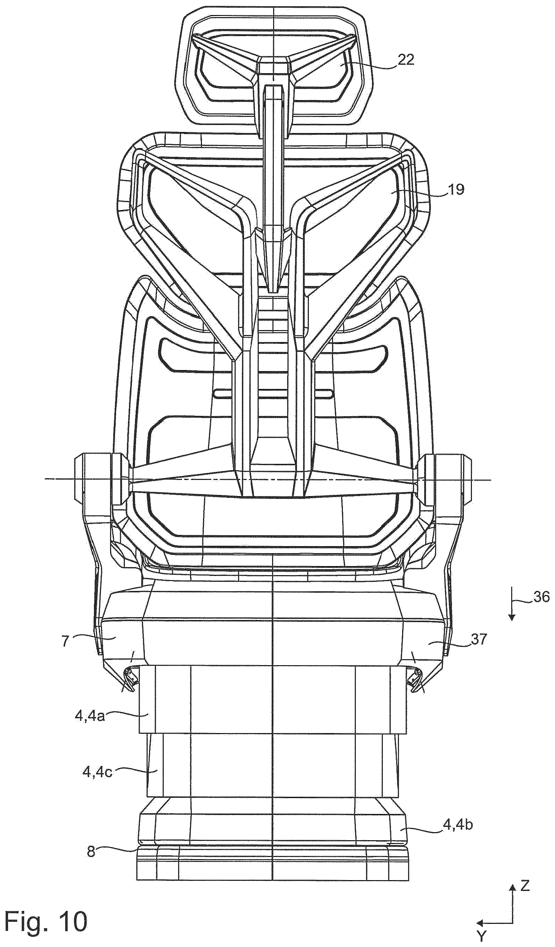

Dies geht auch nochmals aus Figur 10 als rückseitige Außenansicht hervor.

In Figur 12 ist ein derartiger Fahrzeugsitz (1) als Modell wiedergegeben. Wiederum sind die bereits genannten Bauteile zu erkennen, wobei in diesem Fall zusätzlich Armlehnen (24) angeordnet sind. Diese sind vorzugsweise schwenkbar auf der Schwenkachse (33) ebenso angeordnet wie die Rückenlehne (1). Wiederum sind die einzelnen teleskopartigen Abdeckelemente (4, 4a, 4b, 4c) zu erkennen.

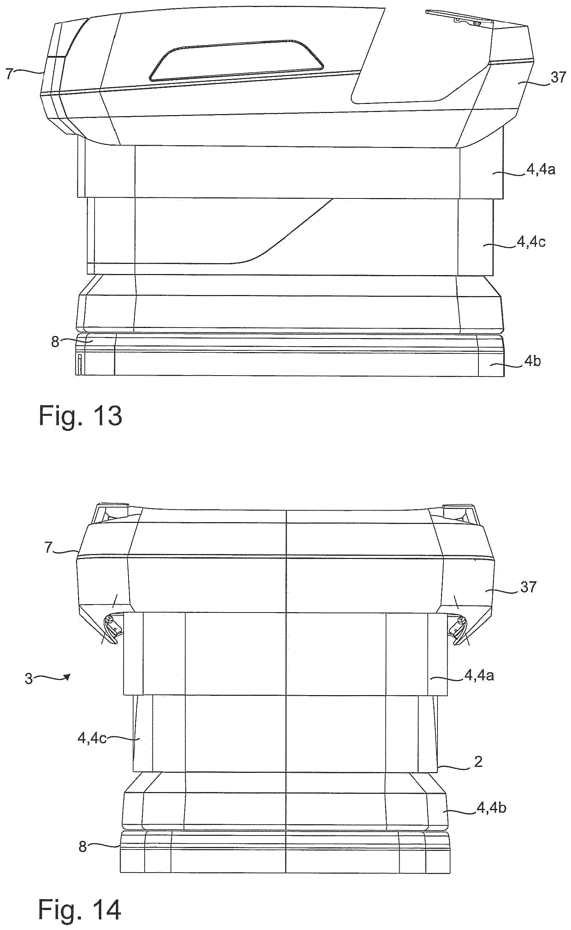

Auch in Figur 13, welche eine Ausschnittsdarstellung der teleskopartigen Abdeckelemente (4, 4a, 4b, 4c) ohne weitere Bauteile des Fahrzeugsitzes (1) wiedergibt, sind diese Abdeckelemente (4, 4a, 4b, 4c) zu sehen. Dies ist hier in einer seitlichen Darstellung wiedergegeben. Die Abdeckelemente (4, 4a, 4b, 4c) können auch mit dem Fußteil (8), welches auch als Abdeckelement (4, 4b) ausgebildet sein kann und ein hier nicht näher dargestelltes Sitzunterteil umfasst, einstückig verbunden sein.

In Figur 14 ist eine Rückansicht dieser teleskopartigen Abdeckelemente (4, 4a, 4b, 4c) wiedergegeben. Wiederum ist das Fußteil (8) als unterstes rahmenartiges Element (4, 4b) ausgebildet, beziehungsweise ist das unterste rahmenartige Element (4, 4b) in dem Fußteil (8) integriert.

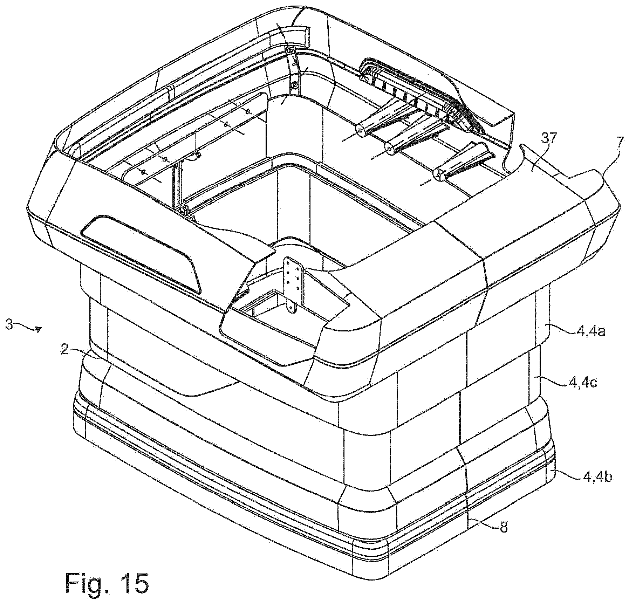

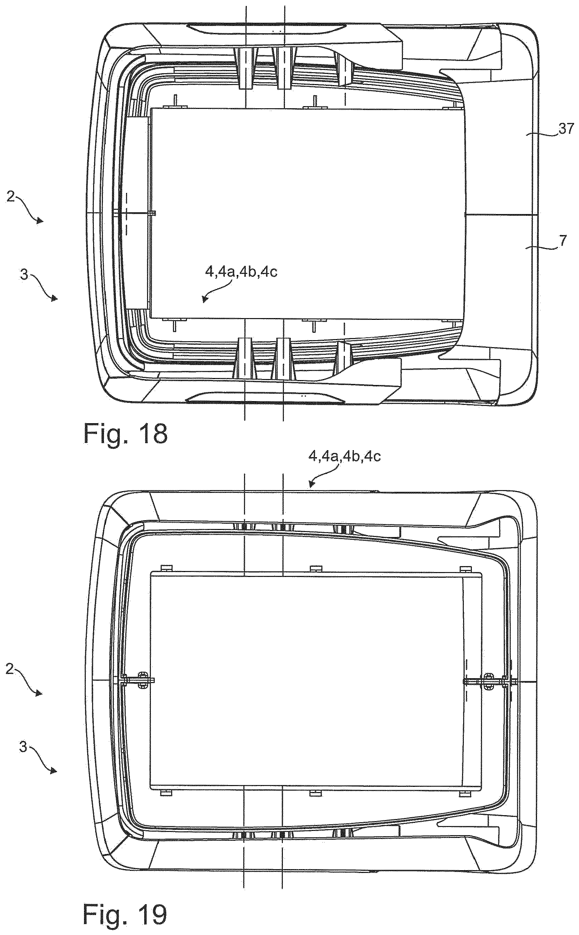

Auch in Figur 15 ist die Abdeckvorrichtung (2) sowie die teleskopartigen Abdeckelemente (4, 4a, 4b, 4c) zusammen mit einem Gehäuseteil (37) des Sitzteil (7) zu sehen. Die Figuren 18 und 19 zeigen die teleskopartigen Abdeckelemente (4, 4a, 4b, 4c) mit dem zusätzlichen Gehäuseteil (37) des Sitzteils (7) in Draufsicht und in Unteransicht.

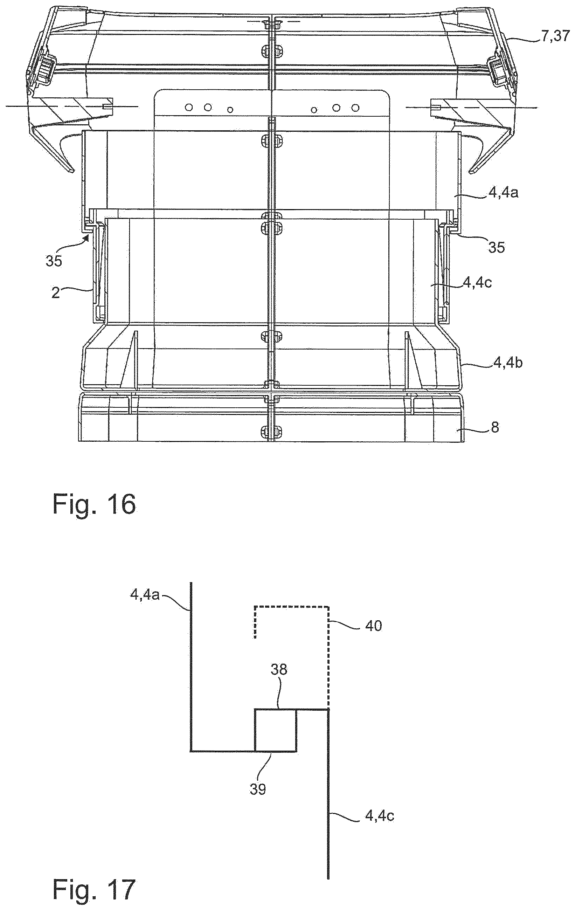

In Fig. 16 ist nun in einer Querschnittsdarstellung verdeutlicht, dass in dem Bereich (35) die rahmenartigen Elemente (4, 4a, 4c) derart ausgebildet sind, dass sie bei einem maximal auseinandergezogenen Zustand, ineinander hängen. Dies bedeutet, dass das mittlere rahmenartige Element (4, 4c) oberseitig mit einem Rand (38), der sich nach außen neigt und umlaufend angeordnet ist, in einem komplementär ausgebildeten unterseitigen Rand (39), der an der Unterseite des obersten rahmenartigen Elements (4, 4a) umlaufend angeordnet ist, eingreift. Auf diese Art und Weise hängt im maximal ausgezogenen Zustand das mittlere rahmenartigen Element (4, 4c) an dem obersten rahmenartigen Element (4, 4a).

In Fig. 17 ist in eine skizzenartig dargestellten Ausschnittsdarstellung des Bereiches (35) wiedergegeben, dass der oberseitige Randverlauf (38), welcher in einem rechten Winkel zu der restlichen vertikal verlaufenden Wand des mittleren rahmenartigen Elementes (4, 4c) angeordnet ist, in einen entsprechend ausgebildeten Randverlauf (39), der zu einem vertikal verlaufenden Wandbereich des obersten rahmenartigen Elementes (4, 4a) angeordnet ist, eingreift. Auf diese Weise kann auf einfache Art ein Ineinandergreifen der beiden rahmenartigen Elemente (4, 4a, 4c) bei Nach-Oben-Fahren des Fahrzeugsitzes (1) gegenüber dem Karosserieboden (9) erreicht werden, wohingegen bei einem Nach-Unten-Fahren des Fahrzeugsitzes (1) gegenüber dem Karosserieboden (9), also bei einer Verringerung des Höhenabstandes zwischen dem Fahrzeugsitzteil (7) und dem Karosserieboden (9) sich automatisch das mittlere rahmenartige Element (4, 4c) von dem obersten rahmenartigen Element (4, 4a) löst und gegenüber dem obersten rahmenartigen Element (4, 4a) sich in dessen Innenbereich nach oben verschiebt. Dies wird andeutungsweise durch die gestrichelte Linie (40) wiedergegeben

Sämtliche rahmenartige Elemente (4, 4a, 4b, 4c) sind vorzugsweise aus einem steifen Material und mit in sich steifen Außenwänden ausgebildet. Sie sind vorzugsweise rahmenartig ausgebildet, sodass sie den inneren Bereich mit den Scherenarmen und weiteren Bauteilen vollständig abdecken. Dieser Rahmen kann eine Grundform eines Quadrats, eines Quadrats mit abgerundeten Eckbereichen, eines Rechteckes jeglicher Kantenlängen oder auch rund oder ellipsenartig ausgestaltet sein.

Selbstverständlich kann eine derartige teleskopartige Abdeckung (2) aus mehr als zwei Elementen, beispielsweise aus drei, vier oder noch mehr Elementen in unterschiedlicher Höhe oder in gleicher Höhenausbildung bestehen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeugsitz
- 2: Abdeckungsvorrichtung
- 3: Sitzunterbau
- 4: rahmenartige Elemente
- 4a: oberstes rahmenartiges Element
- 4b: unterstes rahmenartiges Element
- 4c: mittleres rahmenartiges Element
- 5: Führungsvorrichtung
- 6: elastisches Element
- 6a: erstes elastische Element
- 6b: zweites elastisches Element
- 7: Sitzteil
- 8: Fußteil
- 9: Fahrzeugkarosserie
- 10: oberes Stegelement
- 10a: erstes oberes Stegelement
- 10b: zweites oberes Stegelement
- 11: unteres Stegelement
- 11a: erstes unteres Stegelement
- 11b: zweites unteres Stegelement
- 12: Innenseite der rahmenartigen Elemente
- 13: oberer Rand des mittleren rahmenartigen Elements
- 14: oberer Rand des untersten rahmenartigen Elements
- 15: Druckfederelement
- 15a: oberes Ende des Druckfederelements
- 15b: unteres Ende des Druckfederelements
- 16a, 16b: Führungselement
- 17: Gleitaufnahme
- 17a: Gleitaufnahme
- 17b: Gleitaufnahme
- 18: Führungselement
- 18a: Führungselement
- 18b: Führungselement
- 19: Rückenlehne
- 20: Tragegestell
- 21: Feder- und/oder Dämpfungsvorrichtung
- 22: Kopfteil
- 23: Polsterelement
- 24: Armlehnen
- 25: Höhe
- 26: Abstand
- 27: Pfeil
- 33: Schwenkachse
- 34: Schenkelbauteilen
- 35: Bereich
- 36: Pfeil
- 37: Gehäuseteil des Sitzteils
- 38: Rand
- 39: Rand
- 40: Linie
- X: Tiefenachse
- Y: Breitenachse
- Z: Höhenachse

## Patentansprüche

1. Abdeckungsvorrichtung (2) für einen Sitzunterbau (3) eines Fahrzeugsitzes (1), wobei die Abdeckungsvorrichtung (2) den Sitzunterbau (3) seitlich umgibt und zumindest zwei in sich steife rahmenartige Elemente (4, 4a, 4b, 4c) umfasst,
**dadurch gekennzeichnet, dass**
die zumindest zwei rahmenartigen Elemente (4, 4a, 4b, 4c) entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das zumindest eine elastische Element (6, 6a, 6b) zwischen zwei rahmenartigen Elementen (4, 4a, 4b, 4c) angeordnet ist.

2. Abdeckungsvorrichtung (2) nach Anspruch 1,
**dadurch gekennzeichnet, dass**
die Abdeckungsvorrichtung (2) zumindest drei in sich steife rahmenartige Elemente (4, 4a, 4b, 4c) umfasst, wobei die Abdeckungsvorrichtung (2) drei in sich steife rahmenartige Elemente (4, 4a, 4b, 4c) umfasst, wobei die Abdeckungsvorrichtung (2) ein entlang der Höhenachse Z oberstes (4, 4a) und ein entlang der Höhenachse Z unterstes rahmenartiges Element (4, 4b) umfasst, wobei das oberste rahmenartige Element (4, 4a) an einem Sitzteil (7) anordenbar ist, wobei das unterste rahmenartige Element (4, 4b) an einem Fußteil (8) des Fahrzeugsitzes (1) oder an einer Oberfläche der Fahrzeugkarosserie (9) anordenbar ist.

3. Abdeckungsvorrichtung (2) nach Anspruch 2,
**dadurch gekennzeichnet, dass**.
das zumindest eine elastische Element (6) zwischen dem obersten rahmenartigen Element (4, 4a) und einem mittleren rahmenartigen Element (4, 4c) angeordnet ist.

4. Abdeckungsvorrichtung (2) nach einem der vorhergehenden Ansprüche
**dadurch gekennzeichnet, dass**
das zumindest eine elastische Element (6, 6a, 6b) zwischen einem ersten (4, 4a, 4b, 4c) und einem zweiten rahmenartigen Element (4, 4a, 4b, 4c) angeordnet ist, wobei durch eine Verringerung des relativen Abstands des ersten (4, 4a, 4b, 4c) und zweiten rahmenartigen Elements (4, 4a, 4b, 4c) zueinander ein Krafteintrag in das zumindest eine elastische Element (6, 6a, 6b) erfolgt, wobei dieser Krafteintrag eine elastische Verformung des zumindest einen elastischen Elements (6, 6a, 6b) erzeugt, wobei das zumindest eine elastische Element (6, 6a, 6b) ein Druckfederelement, ein Torsionsfederelement oder ein Elastomerkörper ist.

5. Abdeckungsvorrichtung (2) nach einem der vorhergehenden Ansprüche,
**dadurch gekennzeichnet, dass**
das zumindest eine elastische Element (6, 6a, 6b) an einer Innenseite (12) der rahmenartigen Elemente (4, 4a, 4b, 4c), welche dem Sitzunterbau (3) zugewandt ist, angeordnet ist, wobei die Abdeckungsvorrichtung (2) zumindest zwei elastische Elemente (6, 6a, 6b) aufweist, wobei je zwei elastische Elemente (6, 6a, 6b), an sich gegenüberliegenden Innenseiten (12) der rahmenartigen Elemente, (4, 4a, 4b) angeordnet sind.

6. Abdeckungsvorrichtung (2) nach einem der vorhergehenden Ansprüche,
**dadurch gekennzeichnet, dass**
das zumindest eine elastische Element (6, 6a, 6b) mittels jeweils eines nach innen ragenden Stegelementes (10,10a, 10b, 11, 11a, 11b) an den beiden rahmenartigen Elementen (4, 4a, 4b, 4c), befestigt ist, wobei zumindest ein Stegelement (10,10a, 10b, 11, 11a, 11b) bei einer maximalen Stauchung der Abdeckungsvorrichtung (2) einen oberen Rand (13, 14) des entlang der Höhenachse Z darunterliegenden rahmenartigen Elements (4, 4b, 4c), kontaktiert.

7. Abdeckungsvorrichtung (2) nach einem der vorhergehenden Ansprüche,
**dadurch gekennzeichnet, dass**
die Führungsvorrichtung (5) zumindest eine Gleitaufnahme (17, 17a, 17b) in Form einer Nut oder einer Schiene umfasst, welche an einem rahmenartigen Element (4, 4a, 4b, 4c) angeordnet ist, wobei die Führungsvorrichtung (5) zumindest ein Führungselement (18) umfasst, welches an einem rahmenartigen Element (4, 4a, 4b, 4c) angeordnet ist, wobei das Führungselement (18, 18a, 18b) in oder an der Gleitaufnahme (17, 17a, 17b) in Form einer Nut oder einer Schiene geführt ist, wobei das Führungselement (18, 18a, 18b) an einem rahmenartigen Element (4, 4b, 4c) angeordnet ist, welches entlang der Höhenachse Z unter dem rahmenartigen Element (4, 4a, 4b) mit der Gleitaufnahme (17, 17a, 17b) angeordnet ist.

8. Fahrzeugsitz (1), umfassend ein Sitzteil (7), eine Rückenlehne (18), und einen Sitzunterbau (3), welcher entlang einer Höhenachse Z unter dem Sitzteil (7) angeordnet ist, wobei der Sitzunterbau (3) seitlich von einer Abdeckungsvorrichtung (2) vollständig umschlossen ist, wobei die Abdeckungsvorrichtung (2) zumindest zwei in sich steife rahmenartige Elemente (4, 4a, 4b, 4c) umfasst,
**dadurch gekennzeichnet, dass**
die zumindest zwei rahmenartigen Elemente (4, 4a, 4b, 4c) entlang einer Höhenachse Z teleskopartig ineinander verlagerbar sind, wobei zumindest eine Führungsvorrichtung (5) vorgesehen ist, mittels welcher die rahmenartigen Elemente (4, 4a, 4b, 4c) bei einer Verlagerung entlang einer Höhenachse Z geführt werden, wobei zumindest ein elastisches Element (6, 6a, 6b) vorgesehen ist, mittels welchem die Abdeckungsvorrichtung (2) zu einem vorgegebenen Ausgangszustand rückstellbar ist, wobei das zumindest eine elastische Element (6, 6a, 6b) zwischen zwei rahmenartigen Elementen (4, 4a, 4b, 4c) angeordnet ist

9. Fahrzeugsitz (1) nach Anspruch 8,
**dadurch gekennzeichnet, dass**
der Sitzunterbau (3) ein Tragegestell (20) umfasst, mittels welchem das Sitzteil (7) mit einem Fußteil (8) und/oder einer Fahrzeugkarosserie (9) verbunden ist, wobei der Sitzunterbau (3) eine Feder- und/oder Dämpfungsvorrichtung (21) für Schwingungen in vertikaler Richtung umfasst, wobei der Sitzunterbau (3) eine Feder- und/oder Dämpfungsvorrichtung für Schwingungen in horizontaler Richtung umfasst.

10. Fahrzeugsitz (1) nach einem der Ansprüche 8 bis 9,
**dadurch gekennzeichnet, dass**
die Abdeckungsvorrichtung (2) zumindest drei in sich steife rahmenartige Elemente (4, 4a, 4b, 4c) umfasst, wobei die Abdeckungsvorrichtung (2) drei in sich steife rahmenartige Elemente (4, 4a, 4b, 4c) umfasst, wobei die Abdeckungsvorrichtung (2) ein entlang der Höhenachse Z oberstes (4, 4a) und ein entlang der Höhenachse Z unterstes rahmenartiges Element (4, 4b) umfasst, wobei das oberste rahmenartige Element (4, 4a) an einem Sitzteil (7) anordenbar ist, wobei das unterste rahmenartige Element (4, 4b) an einem Fußteil (8) des Fahrzeugsitzes (1) oder an einer Oberfläche der Fahrzeugkarosserie (9) anordenbar ist, wobei das zumindest eine elastische Element (6) zwischen dem obersten rahmenartigen Element (4, 4a) und einem mittleren rahmenartigen Element (4, 4c) angeordnet ist.

11. Fahrzeugsitz (1) nach einem der Ansprüche 8 bis 10,
**dadurch gekennzeichnet, dass**
das elastische Element (6, 6a, 6b) an einer Innenseite (12) der rahmenartigen Elemente (4, 4a, 4b, 4c), welches dem Sitzunterbau (3) zugewandt ist, angeordnet ist, wobei die Abdeckungsvorrichtung (2) zumindest zwei elastische Elemente (6, 6a, 6b) aufweist, wobei je zwei elastische Elemente (6, 6a, 6b) an sich gegenüberliegenden Innenseiten (12) der rahmenartigen Elemente (4, 4a, 4b) angeordnet sind.

12. Fahrzeugsitz (1) nach einem der Ansprüche 8 bis 11,
**dadurch gekennzeichnet, dass**
das zumindest eine elastische Element (6, 6a, 6b) zwischen einem ersten (4, 4a, 4b, 4c) und einem zweiten rahmenartigen Element (4, 4a, 4b, 4c) angeordnet ist, wobei durch eine Verringerung des relativen Abstands des ersten (4, 4a, 4b, 4c) und zweiten rahmenartigen Elements (4, 4a, 4b, 4c) zueinander ein Krafteintrag in das zumindest eine elastische Element (6, 6a, 6b) erfolgt, wobei dieser Krafteintrag eine elastische Verformung des zumindest einen elastischen Elements (6, 6a, 6b) erzeugt, wobei das zumindest eine elastische Element (6, 6a, 6b) ein Druckfederelement, ein Torsionsfederelement oder ein Elastomerkörper ist, wobei das elastische Element (6, 6a, 6b) mittels jeweils eines nach innen ragenden Stegelementes (10,10a, 10b, 11, 11a, 11b) an den beiden rahmenartigen Elementen (4, 4a, 4b, 4c), befestigt ist, wobei zumindest ein Stegelement (10,10a, 10b, 11, 11a, 11b) bei einer maximalen Stauchung der Abdeckungsvorrichtung (2) einen oberen Rand (13, 14) des entlang der Höhenachse Z darunterliegenden rahmenartigen Elements (4, 4b, 4c), kontaktiert.

13. Fahrzeugsitz (1) nach einem der Ansprüche 7 bis 12,
**dadurch gekennzeichnet, dass**
die Führungsvorrichtung (5) zumindest eine Gleitaufnahme (17, 17a, 17b) in Form einer Nut oder einer Schiene umfasst, welche an einem rahmenartigen Element (4, 4a, 4b, 4c) angeordnet ist, wobei die Führungsvorrichtung (5) zumindest ein Führungselement (18) umfasst, welches an einem rahmenartigen Element (4, 4a, 4b, 4c) angeordnet ist, wobei das Führungselement (18, 18a, 18b) in oder an der Gleitaufnahme (17, 17a, 17b) in Form einer Nut oder einer Schiene geführt ist, wobei das Führungselement (18, 18a, 18b) an einem rahmenartigen Element (4, 4b, 4c) angeordnet ist, welches entlang der Höhenachse Z unter dem rahmenartigen Element (4, 4a, 4b) mit der Gleitaufnahme (17, 17a, 17b) angeordnet ist.

## Claims

1. Cover device (2) for a seat substructure (3) of a vehicle seat (1), wherein the cover device (2) laterally surrounds the seat substructure (3) and comprises at least two inherently rigid frame-like element (4, 4a, 4b, 4c),
**characterised in that**
the at least two frame-like elements (4, 4a, 4b, 4c) are telescopically displaceable along a height axis Z into each other, wherein at least one guiding device (5) is provided, by means of which the frame-like elements (4, 4a, 4b, 4c) are guided in a displacement along a height axis Z, wherein at least one elastic element (6, 6a, 6b) is provided, by means of which the cover device (2) can be reset to a predetermined initial state, wherein the at least one elastic element (6, 6a, 6b) is arranged between two frame-like elements (4, 4a, 4b, 4c).

2. Cover device (2) according to claim 1,
**characterised in that**
the cover device (2) comprises at least three inherently rigid frame-like elements (4, 4a, 4b, 4c), wherein the cover device (2) comprises three inherently rigid frame-like elements (4, 4a, 4b, 4c), wherein the cover device (2) comprises a top frame-like element (4, 4a) along the height axis Z and a bottom frame-like element (4, 4b) along the height axis Z, wherein the top frame-like element (4, 4a) can be arranged on a seat part (7), wherein the bottom frame-like element (4, 4b) can be arranged on a foot part (8) of the vehicle seat (1) or on a surface of the vehicle body (9).

3. Cover device (2) according to claim 2,
**characterised in that**
the at least one elastic element (6) is arranged between the top frame-like element (4, 4a) and a middle frame-like element (4, 4c).

4. Cover device (2) according to any one of the preceding claims
**characterised in that**
the at least one elastic element (6, 6a, 6b) is arranged between a first (4, 4a, 4b, 4c) and a second frame-like element (4, 4a, 4b, 4c), wherein a reduction in the relative distance of the first (4, 4a, 4b, 4c) and second frame-like element (4, 4a, 4b, 4c) to one another causes a force application into the at least one elastic element (6, 6a, 6b), wherein said force application creates an elastic deformation of at least one elastic element (6, 6a, 6b), wherein the at least one elastic element (6, 6a, 6b) is a compression spring element, a torsion spring element or an elastomeric body.

5. Cover device (2) according to any of the preceding claims,
**characterised in that**
the at least one elastic element (6, 6a, 6b) is arranged on an inner side (12) of the frame-like elements (4, 4a, 4b, 4c), which faces the seat substructure (3), wherein the cover device (2) has at least two elastic elements (6, 6a, 6b), wherein two elastic elements (6, 6a, 6b) each are arranged on opposite inner sides (12) of the frame-like elements (4, 4a, 4b).

6. Cover device (2) according to any of the preceding claims,
**characterised in that**
the at least one elastic element (6, 6a, 6b) is fastened on the two frame-like elements (4, 4a, b, 4c) in each case by means of an inwardly projecting web element (10,10a, 10b, 11, 11a, 11b), wherein at least one web element (10,10a, 10b, 11, 11a, 11b), in case of a maximum compression of the cover device (2), contacts an upper edge (13, 14) of the underlying frame-like element (4, 4b, 4c) along the height axis Z.

7. Cover device (2) according to any of the preceding claims,
**characterised in that**
the guiding device (5) comprises at least one sliding receptacle (17, 17a, 17b) in the form of a groove or a rail, which is arranged on a frame-like element (4, 4a, 4b, 4c), wherein the guiding device (5) comprises at least one guiding element (18) which is arranged on a frame-like element (4, 4a, 4b, 4c), wherein the guiding element (18, 18a, 18b) is guided in or on the sliding receptacle (17, 17a, 17b) in the form of a groove or a rail, wherein the guiding element (18, 18a, 18b) is arranged on a frame-like element (4, 4b, 4c) which is arranged along the height axis Z under the frame-like element (4, 4a, 4b) with the sliding receptacle (17, 17a, 17b).

8. Vehicle seat (1) comprising a seat part (7), a backrest (18), and a seat substructure (3) arranged along a height axis Z under the seat part (7), wherein the seat substructure (3) is completely enclosed laterally by a cover device (2), wherein the cover device (2) comprises at least two inherently rigid frame-like elements (4, 4a, 4b, 4c)
**characterised in that**
the at least two frame-like elements (4, 4a, 4b, 4c) are telescopically displaceable along a height axis Z into each other, wherein at least one guiding device (5) is provided, by means of which the frame-like elements (4, 4a, 4b, 4c) are guided in a displacement along a height axis Z, wherein at least one elastic element (6, 6a, 6b) is provided, by means of which the cover device (2) can be reset to a predetermined initial state, wherein the at least one elastic element (6, 6a, 6b) is arranged between two frame-like elements (4, 4a, 4b, 4c).

9. Vehicle seat (1) according to claim 8,
**characterised in that**
the seat substructure (3) comprises a support frame (20), by means of which the seat part (7) is connected to a foot part (8) and/or a vehicle body (9), wherein the seat substructure (3) comprises a spring and/or damping device (21) for vibrations in the vertical direction, wherein the seat substructure (3) comprises a spring and/or damping device for vibrations in the horizontal direction.

10. Vehicle seat (1) according to either claim 8 or claim 9,
**characterised in that**
the cover device (2) comprises at least three inherently rigid frame-like elements (4, 4a, 4b, 4c), wherein the cover device (2) comprises three rigid frame-like elements (4, 4a, 4b, 4c), wherein the cover device (2) comprises a top frame-like element (4, 4a) along the height axis Z and a bottom frame-like element (4, 4b) along the height axis Z, wherein the top frame-like element (4, 4a) can be arranged on a seat part (7), wherein the bottom frame-like element (4, 4b) can be arranged on a foot part (8) of the vehicle seat (1) or on a surface of the vehicle body (9), wherein the at least one elastic element (6) is arranged between the top frame-like element (4, 4a) and a middle frame-like element (4, 4c).

11. Vehicle seat (1) according to any of claims 8 to 10,
**characterised in that**
the elastic element (6, 6a, 6b) is arranged on an inner side (12) of the frame-like elements (4, 4a, 4b, 4c), which faces the seat substructure (3), wherein the cover device (2) has at least two elastic elements (6, 6a, 6b), wherein two elastic elements (6, 6a, 6b) each are arranged on opposite inner sides (12) of the frame-like elements (4, 4a, 4b).

12. Vehicle seat (1) according to any of claims 8 to 11,
**characterised in that**
the at least one elastic element (6, 6a, 6b) is arranged between a first (4, 4a, 4b, 4c) and a second frame-like element (4, 4a, 4b, 4c), wherein by reducing the relative distance of the first (4, 4a, 4b, 4c) and second frame-like element (4, 4a, 4b, 4c) to each other, a force is applied into the at least one elastic element (6, 6a, 6b), wherein this force application creates an elastic deformation of the at least one elastic element (6, 6a, 6b), wherein the at least one elastic element (6, 6a, 6b) is a compression spring element, a torsion spring element or a elastomeric body, wherein the elastic element (6, 6a, 6b) is fastened on the two frame-like elements (4, 4a, 4b, 4c) in each case by means of an inwardly projecting web element (10, 10a, 10b, 11, 11a, 11b), wherein at least one web element (10, 10a, 10b, 11, 11a, 11b), in case of a maximum compression of the cover device (2), contacts an upper edge (13, 14) of the underlying frame-like element (4, 4b, 4c) along the height axis Z.

13. Vehicle seat (1) according to any of the claims 7 to 12,
**characterised in that**
the guiding device (5) comprises at least one sliding receptacle (17, 17a, 17b) in the form of a groove or a rail, which is arranged on a frame-like element (4, 4a, 4b, 4c), wherein the guide device (5) comprises at least one guiding element (18), which is arranged on a frame-like element (4, 4a, 4b, 4c), wherein the guiding element (18, 18a, 18b) is guided in or on the sliding receptacle (17, 17a, 17b) in the form of a groove or a rail, wherein the guiding element (18, 18a, 18b) is arranged on a frame-like element (4, 4b, 4c), which is arranged along the height axis Z under the frame-like element (4, 4a, 4b) with the sliding receptacle (17, 17a, 17b).

## Revendications

1. Dispositif de recouvrement (2) pour une sous-structure de siège (3) d'un siège de véhicule (1), le dispositif de recouvrement (2) entourant latéralement la sous-structure de siège (3) et comportant au moins deux éléments en forme de cadre (4, 4a, 4b, 4c) rigides en soi,
**caractérisé par le fait que**
lesdits au moins deux éléments en forme de cadre (4, 4a, 4b, 4c) sont déplaçables l'un dans l'autre de façon télescopique le long d'un axe dans le sens de la hauteur Z, au moins un dispositif de guidage (5) étant prévu, au moyen duquel les éléments en forme de cadre (4, 4a, 4b, 4c) sont guidés le long d'un axe dans le sens de la hauteur Z lors d'un déplacement, au moins un élément élastique (6, 6a, 6b) étant prévu, au moyen duquel le dispositif de recouvrement (2) est apte à être rappelé à un état initial prédéterminé, ledit au moins un l'élément élastique (6, 6a, 6b) étant disposé entre deux éléments en forme de cadre (4, 4a, 4b, 4c).

2. Dispositif de recouvrement (2) selon la revendication 1,
**caractérisé par le fait que**
le dispositif de recouvrement (2) comporte au moins trois éléments en forme de cadre (4, 4a, 4b, 4c) rigides en soi, le dispositif de recouvrement (2) comportant trois éléments en forme de cadre (4, ,4a, 4b, 4c) rigides en soi, le dispositif de recouvrement (2) comportant un élément en forme de cadre supérieur (4, 4a) le long de l'axe dans le sens de la hauteur Z et un élément en forme de cadre inférieur (4, 4b) le long de l'axe dans le sens de la hauteur Z, l'élément en forme de cadre supérieur (4, 4a) étant apte à être disposé sur une partie assise (7), l'élément en forme de cadre inférieur (4, 4b) étant apte à être disposé sur une partie de pied (8) du siège de véhicule (1) ou sur une surface de la carrosserie de véhicule (9).

3. Dispositif de recouvrement (2) selon la revendication 2,
**caractérisé par le fait que** ledit au moins un élément élastique (6) est disposé entre l'élément en forme de cadre supérieur (4, 4a) et un élément en forme de cadre médian (4, 4c).

4. Dispositif de recouvrement (2) selon l'une des revendications précédentes,
**caractérisé par le fait que**
ledit au moins un élément élastique (6, 6a, 6b) est disposé entre un premier (4, 4a, 4b, 4c) et un second élément en forme de cadre (4, 4a, 4b, 4c), une entrée de force ayant lieu dans ledit au moins un élément élastique (6, 6a, 6b) par une réduction de la distance relative du premier (4, 4a, 4b, 4c) et du second élément en forme de cadre (4, 4a, 4b, 4c) l'un par rapport à l'autre, cette entrée de force produisant une déformation élastique dudit au moins un élément élastique (6, 6a, 6b), ledit au moins un élément élastique (6, 6a, 6b) étant un élément formant ressort de compression, un élément formant ressort de torsion ou un corps en élastomère.

5. Dispositif de recouvrement (2) selon l'une des revendications précédentes,
**caractérisé par le fait que**
ledit au moins un élément élastique (6, 6a, 6b) est disposé sur un côté interne (12) des éléments en forme de cadre (4, 4a, 4b, 4c), lequel est tourné vers la sous-structure de siège (3), le dispositif de recouvrement (2) présentant au moins deux éléments élastiques (6, 6a, 6b), à chaque fois deux éléments élastiques (6, 6a, 6b) étant disposés sur des côtés internes se faisant face (12) des éléments en forme de cadre (4, 4a, 4b).

6. Dispositif de recouvrement (2) selon l'une des revendications précédentes,
**caractérisé par le fait que**
ledit au moins un élément élastique (6, 6a, 6b) est fixé aux deux éléments en forme de cadre (4, 4a, 4b, 4c) au moyen respectivement d'un élément de pontage faisant saillie vers l'intérieur (10, 10a, 10b, 11, 11a, 11b), au moins un élément de pontage (10, 10a, 10b, 11, 11a, 11b) étant en contact avec un bord supérieur (13, 14) de l'élément en forme de cadre (4, 4b, 4c) situé au-dessous le long de l'axe dans le sens de la hauteur Z lors d'un écrasement maximal du dispositif de recouvrement (2).

7. Dispositif de recouvrement (2) selon l'une des revendications précédentes,
**caractérisé par le fait que**
le dispositif de guidage (5) comporte au moins un logement de glissement (17, 17a, 17b) sous la forme d'une rainure ou d'un rail, lequel est disposé sur un élément en forme de cadre (4, 4a, 4b, 4c), le dispositif de guidage (5) comportant au moins un élément de guidage (18), lequel est disposé sur un élément en forme de cadre (4, 4a, 4b, 4c), l'élément de guidage (18, 18a, 18b) étant guidé dans ou sur le logement de glissement (17, 17a, 17b) sous la forme d'une rainure ou d'un rail, l'élément de guidage (18, 18a, 18b) étant disposé sur un élément en forme de cadre (4, 4b, 4c), lequel est disposé avec le logement de glissement (17, 17a, 17b) sous l'élément en forme de cadre (4, 4a, 4b) le long de l'axe dans le sens de la hauteur Z.

8. Siège de véhicule (1), comportant une partie assise (7), un dossier (18) et une sous-structure de siège (3), laquelle est disposée sous la partie assise (7) le long d'un axe dans le sens de la hauteur Z, dans lequel la sous-structure de siège (3) est entourée entièrement latéralement par un dispositif de recouvrement (2), le dispositif de recouvrement (2) comportant au moins deux éléments en forme de cadre (4, 4a, 4b, 4c) rigides en soi, **caractérisé par le fait que**
lesdits au moins deux éléments en forme de cadre (4, 4a, 4b, 4c) sont déplaçables l'un dans l'autre de façon téléscopique le long d'un axe dans le sens de la hauteur Z, au moins un dispositif de guidage (5) étant prévu, au moyen duquel les éléments en forme de cadre (4, 4a, 4b, 4c) sont guidés le long d'un axe dans le sens de la hauteur Z lors d'un déplacement, au moins un élément élastique (6, 6a, 6b) étant prévu, au moyen duquel le dispositif de recouvrement (2) est apte à être rappelé à un état initial prédéterminé, ledit au moins un l'élément élastique (6, 6a, 6b) étant disposé entre deux éléments en forme de cadre (4, 4a, 4b, 4c).

9. Siège de véhicule (1) selon la revendication 8,
**caractérisé par le fait que**
la sous-structure de siège (3) comporte un châssis porteur (20), au moyen duquel la partie assise (7) est reliée à une partie de pied (8) et/ou à une carrosserie de véhicule (9), la sous-structure de siège (3) comportant un dispositif à ressort et/ou d'amortissement (21) pour des vibrations dans la direction verticale, la sous-structure de siège (3) comportant un dispositif à ressort et/ou d'amortissement pour des vibrations dans la direction horizontale.

10. Siège de véhicule (1) selon l'une des revendications 8 et 9,
**caractérisé par le fait que**
le dispositif de recouvrement (2) comporte au moins trois éléments en forme de cadre rigides en soi (4, 4a, 4b, 4c), le dispositif de recouvrement (2) comportant trois éléments en forme de cadre rigides en soi (4, 4a, 4b, 4c), le dispositif de recouvrement (2) comportant un élément en forme de cadre supérieur (4, 4a) le long de l'axe dans le sens de la hauteur Z et un élément en forme de cadre inférieur (4, 4b) le long de l'axe dans le sens de la hauteur Z, l'élément en forme de cadre supérieur (4, 4a) étant apte à être disposé sur une partie assise (7), l'élément en forme de cadre inférieur (4, 4b) étant apte à être disposé sur une partie de pied (8) du siège du véhicule (1) ou sur une surface de la carrosserie de véhicule (9), ledit au moins un élément élastique (6) étant disposé entre l'élément en forme de cadre supérieur (4, 4a) et un élément en forme de cadre médian (4, 4c).

11. Siège de véhicule (1) selon l'une des revendications 8 à 10,
**caractérisé par le fait que** l'élément élastique (6, 6a, 6b) est disposé sur un côté interne (12) des éléments en forme de cadre (4, 4a, 4b, 4c), lequel est tourné vers la sous-structure de siège (3), le dispositif de recouvrement (2) présentant au moins deux éléments élastiques (6, 6a, 6b), à chaque fois deux éléments élastiques (6, 6a, 6b) étant disposés sur des côtés internes se faisant face (12) des éléments en forme de cadre (4, 4a, 4b).

12. Siège de véhicule (1) selon l'une des revendications 8 à 11,
**caractérisé par le fait que**
ledit au moins un élément élastique (6, 6a, 6b) est disposé entre un premier (4, 4a, 4b, 4c) et un second élément en forme de cadre (4, 4a, 4b, 4c), une entrée de force ayant lieu dans ledit au moins un élément élastique (6, 6a, 6b) par une réduction de la distance relative du premier (4, 4a, 4b, 4c) et du second élément en forme de cadre (4, 4a, 4b, 4c) l'un par rapport à l'autre, cette entrée de force produisant une déformation élastique dudit au moins un élément élastique (6, 6a, 6b), ledit au moins un élément élastique (6, 6a, 6b) étant un élément formant ressort de compression, un élément formant ressort de torsion ou un corps en élastomère, l'élément élastique (6, 6a, 6b) étant fixé aux deux éléments en forme de cadre (4, 4a, 4b, 4c) au moyen respectivement d'un élément de pontage faisant saillie vers l'intérieur (10, 10a, 10b, 11, 11a, 11b), au moins un élément de pontage (10, 10a, 10b, 11, 11a, 11b) étant en contact avec un bord supérieur (13, 14) de l'élément en forme de cadre (4, 4b, 4c) situé au-dessous le long de l'axe dans le sens de la hauteur Z lors d'un écrasement maximal du dispositif de recouvrement (2).

13. Siège de véhicule (1) selon l'une quelconque des revendications 7 à 12,
**caractérisé par le fait que**
le dispositif de guidage (5) comporte au moins un logement de glissement (17, 17a, 17b) sous la forme d'une rainure ou d'un rail, lequel est disposé sur un élément en forme de cadre (4, 4a, 4b, 4c), le dispositif de guidage (5) comportant au moins un élément de guidage (18), lequel est disposé sur un élément en forme de cadre (4, 4a, 4b, 4c), l'élément de guidage (18, 18a, 18b) étant guidé dans ou sur le logement de glissement (17, 17a, 17b) sous la forme d'une rainure ou d'un rail, l'élément de guidage (18, 18a, 18b) étant disposé sur un élément en forme de cadre (4, 4b, 4c), lequel est disposé avec le logement de glissement (17, 17a, 17b) sous l'élément en forme de cadre (4, 4a, 4b) le long de l'axe dans le sens de la hauteur Z.
